# EUROPEAN PATENT APPLICATION

(11) **EP 3 978 341 A1**
(43) Date of publication of application: **06.04.2022**
(21) Application number: 20815492.2
(22) Date of filing: 12.03.2020
(51) Int. Cl.: B62J 27/00, B60W 30/045, B60W 40/112, B62J 99/00, B62M 7/00, B62M 23/02, F02D 29/02

(54) **TILTING VEHICLE**

(30) Priority: 30.05.2019 JP 2019101708
(71) Applicant: Yamaha Hatsudoki Kabushiki Kaisha, Iwata-shi, Shizuoka 438-8501 (JP)
(72) Inventor: MIKI, Masayuki, Iwata-shi, Shizuoka 438-8501 (JP)
(74) Representative: Zimmermann, Tankred Klaus
(86) International application number: PCT/JP2020/010728
(87) International publication number: WO 2020/240987

(57) **Abstract**

The present teaching provides a leaning vehicle that is easy to turn while moving at a low speed. The leaning vehicle includes a control unit including a drive-wheel rotation-speed acceleration assisting controller that increases the power transmitted from the drive source to the drive wheel without the rider performing a drive-wheel rotation-speed increasing operation and thereby increases the rotation speed of the drive wheel, whereby the moving speed of the leaning vehicle is accelerated, so that, in turn, there is an increase of centrifugal force acting on the leaning vehicle while the leaning vehicle is moving and turning, the drive-wheel rotation-speed increasing operation being an operation that the rider performs toward the acceleration operator to increase the power transmitted from the drive source to the drive wheel and thereby increase the rotation speed of the drive wheel; and a brake unit that is operable by the rider to decelerate the moving speed of the leaning vehicle even when the rotation speed of the drive wheel is increased caused by the increase of the power transmitted from the drive source, the increase of the power being performed by the drive-wheel rotation-speed acceleration assisting controller.

## Description

### Technical Field

The present teaching relates to a leaning vehicle including a leaning vehicle body that leans leftward when the leaning vehicle is turning left and learns rightward when the leaning vehicle is turning right.

### Background Art

There have been leaning vehicles such as motorcycles. A leaning vehicle has a leaning vehicle body. When the leaning vehicle is turning left, the leaning vehicle body leans leftward by a force applied from a rider of the leaning vehicle due to a left turn action of the rider. When the leaning vehicle is turning right, the leaning vehicle body leans rightward by a force applied from a rider of the leaning vehicle due to a right turn action of the rider. Therefore, when a rider is driving such a leaning vehicle, the rider should consider and assume the lean angle of the leaning vehicle body.

There are some known techniques in driving a two-wheeled leaning vehicle, especially to provide driving stability while making a turn at a low speed. More specifically, there are some known techniques to make it easier to make a turn while driving a two-wheeled leaning vehicle at a low speed by providing driving stability during the turn. Such a technique is disclosed, for example, in International Patent Application Publication WO 2014/017138.

WO 2014/017138 discloses that a maximum tolerable lean angle of the vehicle body is set for a speed of the vehicle body. When the actual lean angle of the vehicle body exceeds the maximum tolerable lean angle, the speed of the vehicle body accelerates.

WO 2014/017138 provides a preferred embodiment in which the speed of the vehicle body is controlled in accordance with estimated moving conditions of the vehicle body for forthcoming moments. Specifically, an estimated lean angle of the vehicle body for forthcoming moments is calculated based on the actual change of the lean angle of the vehicle body from moment to moment. Additionally, the estimated speed of the vehicle body for forthcoming moments is calculated based on the actual change of the speed of the vehicle body from moment to moment. When the estimated lean angle exceeds or is going to exceed the maximum tolerable lean angle, the leaning vehicle takes control to accelerate the speed of the vehicle body or to suppress a decrease of the speed of the vehicle body.

### Citation List

### Patent Literatures

Patent Literature 1: International Patent Application Publication No. WO 2014/017138

### Summary of Invention

### Technical Problem

As described above, it is desired that in a leaning vehicle it is easy to turn while moving at a low speed.

An objective of the present teaching is to provide a leaning vehicle that is easy to turn while moving at a low speed based on a novel technical idea.

### Summary of Invention

### Technical Problem

In order to attain the objective, the present inventor studied leaning vehicles. As a result, the present inventor obtained the following findings.

A leaning vehicle has a leaning vehicle body. When the leaning vehicle is turning left, the leaning vehicle body leans leftward by a force applied from a rider of the leaning vehicle due to a left turn action of the rider. When the leaning vehicle is turning right, the leaning vehicle body leans rightward by a force applied from a rider of the leaning vehicle due to a right turn action of the rider. The leaning of the leaning vehicle body during a turn of the leaning vehicle makes it possible to balance the centripetal force and the centrifugal force acting on the leaning vehicle during the turn.

The centrifugal force acting on a leaning vehicle during a turn of the leaning vehicle varies depending on the moving speed of the leaning vehicle. Specifically, when a leaning vehicle makes a turn while moving at a high speed, a great centrifugal force acts on the leaning vehicle during the turn. On the other hand, when a leaning vehicle makes a turn while moving at a low speed, a small centrifugal force acts on the leaning vehicle during the turn.

With this knowledge, the present inventor studied further. As a result, the present inventor obtained the following findings.

Even when making a turn of a leaning vehicle while driving at a low speed, it is possible to increase the centrifugal force acting on the leaning vehicle during the turn by accelerating the moving speed of the leaning vehicle. An increase in the vehicle moving speed is made in accordance with the rider's operation of the acceleration operator. However, it is a big burden for the rider (especially if the rider is a beginner) to lean the leaning vehicle body while operating the acceleration operator to drive and turn the leaning vehicle. Therefore, when the leaning vehicle is making a turn while moving at a low speed, if the leaning vehicle automatically accelerates the vehicle moving speed even without the rider operating the acceleration operator, the leaning vehicle will be centrifugalized sufficiently during the turn. This will reduce the burden of the rider to drive and turn the leaning vehicle. The present teaching is based on these findings.

A leaning vehicle according to an embodiment of the present teaching includes a drive source, a drive wheel, a leaning vehicle body, and an acceleration operator. The drive wheel is rotated by a power transmitted from the drive source. The leaning vehicle body supports the drive source and the drive wheel. When the leaning vehicle is turning left, the leaning vehicle body leans leftward together with the drive wheel by a force applied from a rider of the leaning vehicle due to a left turn action of the rider. When the leaning vehicle is turning right, the leaning vehicle body leans rightward together with the drive wheel by a force applied from a rider of the leaning vehicle due to a right turn action of the rider. The acceleration operator is operable by the rider to increase the power transmitted from the drive source to the drive wheel and thereby increase the rotation speed of the drive wheel, which is rotated by a power transmitted from the drive source.

The leaning vehicle further includes a control unit and a brake unit. The control unit is capable of increasing the rotation speed of the drive wheel by increasing the power transmitted from the drive source to the drive wheel in accordance with the rider's operation of the acceleration operator. The control unit includes a drive-wheel rotation-speed acceleration assisting controller. The drive-wheel rotation-speed acceleration assisting controller increases the power transmitted from the drive source to the drive wheel without the rider performing a drive-wheel rotation-speed increasing operation and thereby increases the rotation speed of the drive wheel, whereby the moving speed of the leaning vehicle is accelerated, so that, in turn, there is an increase of centrifugal force acting on the leaning vehicle while the leaning vehicle is moving and turning. The drive-wheel rotation-speed increasing operation is an operation that the rider performs toward the acceleration operator to increase the power transmitted from the drive source to the drive wheel and thereby increase the rotation speed of the drive wheel. The brake unit is operable by the rider, and the brake unit decelerates the moving speed of the leaning vehicle even when the rotation speed of the drive wheel is increased caused by the increase of the power transmitted from the drive source, the increase of the power being performed by the drive-wheel rotation-speed acceleration controller.

The leaning vehicle according to the embodiment of the present teaching can accelerate the moving speed of the leaning vehicle without the rider operating the acceleration operator. This reduces the burden of the rider to drive and turn the leaning vehicle and permits the leaning vehicle to be centrifugalized sufficiently during the turn. Thus, the leaning vehicle is easy to turn while moving at a low speed.

When the moving speed of the leaning vehicle is accelerated without the rider operating the acceleration operator, the moving speed of the leaning vehicle can be decelerated gradually by the rider's operation of the brake unit. Thus, the rider can adjust the moving speed of the leaning vehicle arbitrarily by his or her own volition.

The leaning vehicle according to the embodiment of the present teaching, for example, includes at least one front wheel and at least one rear wheel. Specifically, the leaning vehicle is not limited to a two-wheeled vehicle. The leaning vehicle may be a three-wheeled vehicle with a pair of left and right front or rear wheels, or a four-wheeled vehicle with a pair of left and right front wheels and a pair of left and right rear wheels.

In the leaning vehicle according to the embodiment of the present teaching, the drive source generates a power to be transmitted to the drive wheel, and there are no other limitations to the drive source. The drive source may be, for example, an engine, an electric motor, or a combination of an engine and an electric motor. When the drive source is an engine, the leaning vehicle may, for example, include a supercharger. The supercharger may be, for example, a turbocharger or a mechanical supercharger.

In the leaning vehicle according to the embodiment of the present teaching, the drive wheel is rotated by a power transmitted from the drive source, and there are no other limitations to the drive wheel. When the leaning vehicle includes a front wheel and a rear wheel, the drive wheel may be the front wheel or the rear wheel.

In the leaning vehicle according to the embodiment of the present teaching, the leaning vehicle body supports the drive source and the drive wheel. When the leaning vehicle is turning left, the leaning vehicle body leans leftward by a force applied from a rider of the leaning vehicle due to a left turn action of the rider. When the leaning vehicle is turning right, the leaning vehicle body leans rightward by a force applied from a rider of the leaning vehicle due to a right turn action of the rider. There are no other limitations to the leaning vehicle body. The leaning vehicle body may include a vehicle body frame. The vehicle body frame may be a frame assembled from a plurality of components, or a frame formed as a one-piece body of a plurality of parts. The material of the vehicle body frame may be metal such as aluminum, iron, or the like, synthetic resin such as CFRP or the like, or a combination of metal and synthetic resin. The vehicle body frame may be a monocoque type that is formed of exterior parts of the leaning vehicle or may be a semi-monocoque type, part of which also functions as the exterior of the leaning vehicle. There are no particular limitations to how the leaning vehicle body supports the drive source. For example, the leaning vehicle body may support the drive wheel directly or indirectly. The leaning vehicle body leans in the direction in which the leaning vehicle is turning, and there are no other limitations to the leaning vehicle body. Specifically, the leaning vehicle body leans rightward when the leaning vehicle is turning right, and leans leftward when the leaning is turning left, and there are no other limitations to the leaning vehicle body. The lean angle of the leaning vehicle body increases when a gravitational force acts thereon, and there are no other limitations to the leaning vehicle body. In the present teaching, the lean angle of the leaning vehicle body in an upright state is set as a reference (0 degrees). The action for a left turn is, for example, applying a force directly or indirectly to the leaning vehicle body for a left turn of the leaning vehicle, thereby leaning the leaning vehicle body leftward. The action for a right turn is, for example, applying a force directly or indirectly to the leaning vehicle body for a right turn of the leaning vehicle, thereby leaning the leaning vehicle body rightward.

In the leaning vehicle according to the embodiment of the present teaching, the acceleration operator is operable by the rider to increase the power transmitted from the drive source to the drive wheel and thereby increase the rotation speed of the drive wheel, which is rotated by a power transmitted from the drive source, and there are no other limitations to the acceleration operator. For example, the rider can operate the acceleration operator with one hand. The acceleration operator is, for example, a grip that is attached to a handlebar of the leaning vehicle at an end in such a manner to be rotatable around the handlebar. When the acceleration operator is such a grip, the rider's operation of the acceleration operator is to rotate the grip around the handlebar.

In the leaning vehicle according to the embodiment of the present teaching, the control unit is capable of increasing the rotation speed of the drive wheel by increasing the power transmitted from the drive source to the drive wheel in accordance with the rider's operation of the acceleration operator, and includes a drive-wheel rotation-speed acceleration assisting controller. There are no other limitations to the control unit. The control unit is, for example, an ECU (electric control unit). The ECU is implemented, for example, by a combination of an IC (integrated circuit), an electronic component, a circuit board and the like.

According to the embodiment of the present teaching, the drive-wheel rotation-speed acceleration assisting controller increases the power transmitted from the drive source to the drive wheel without the rider performing a drive-wheel rotation-speed increasing operation and thereby increases the rotation speed of the drive wheel, whereby the moving speed of the leaning vehicle is accelerated, so that, in turn, there is an increase of centrifugal force acting on the leaning vehicle while the leaning vehicle is moving and turning. There are no other limitations to the drive-wheel rotation-speed acceleration assisting controller. The drive-wheel rotation-speed acceleration assisting controller is implemented, for example, when a CPU (central processing unit) reads a program stored in a non-volatile memory and executes a predetermined process according to the program. The drive-wheel rotation-speed acceleration assisting controller may carry out the control when the rider performs a drive-wheel rotation-speed increasing operation.

In the leaning vehicle according to the embodiment of the present teaching, the brake unit is operable by the rider, and the brake unit decelerates the moving speed of the leaning vehicle even when the rotation speed of the drive wheel is increased caused by the increase of the power transmitted from the drive source, the increase of the power being performed by the drive-wheel rotation-speed acceleration controller. There are no other limitations to the brake unit. The brake unit, for example, may decelerate the moving speed of the leaning vehicle even when the rotation speed of the drive wheel is increased caused by the increase of the power transmitted from the drive source, the increase of the power being performed by the drive-wheel rotation-speed acceleration controller. The brake unit, for example, converts kinetic energy into thermal energy by friction. Such a brake unit may be, for example, a disk brake or a drum brake. The brake unit may be operated by the rider directly or indirectly. The rider's way of operating the brake unit indirectly includes, for example, the rider operating the brake unit by operating a brake operator. The brake operator may be an element that the rider can operate by hand or an element that the rider can operate by foot. When the brake operator is an element that the rider can operate by foot, the rider does not need to use his or her hand to operate the brake operator to decelerate the moving speed of the leaning vehicle. In this case, it is easier to drive and turn the leaning vehicle at a low speed.

In the leaning vehicle according to the embodiment of the present teaching, the drive-wheel rotation-speed acceleration assisting controller may include a moving-and-turning determination section. The moving-and-turning determination section determines whether or not the leaning vehicle is moving and turning.

In the leaning vehicle with this feature, when the moving-and-turning determination section determines that the leaning vehicle is moving and turning, the drive-wheel rotation-speed acceleration assisting controller may increase the power transmitted from the drive source to the drive wheel without the rider performing the drive-wheel rotation-speed increasing operation and thereby increase the rotation speed of the drive wheel, whereby the moving speed of the leaning vehicle is accelerated, so that, in turn, there is an increase of centrifugal force acting on the leaning vehicle while the leaning vehicle is moving and turning.

In this case, while the leaning vehicle is moving and turning, the moving speed of the leaning vehicle can be accelerated without the rider operating the acceleration operator. Thereby, the leaning vehicle can be centrifugalized sufficiently. Thus, the leaning vehicle is easy to drive and turn at a low speed.

In the leaning vehicle with this feature, the moving-and-turning determination section determines whether or not the leaning vehicle is moving and turning, and there are no other limitations to the moving-and-turning determination section. The moving-and-turning determination section is implemented, for example, when the CPU (central processing unit) reads a program stored in the nonvolatile memory and executes a predetermined process according to the program.

The leaning vehicle according to the embodiment of the present teaching may further include a steerable wheel, a steerable-wheel rotation-speed sensor, and a drive-wheel rotation-speed sensor. The steerable wheel is positioned more frontward or more rearward than the drive wheel with respect to a frontward-rearward direction of the leaning vehicle, and the steerable wheel is steered when the rider performs a steering action and applies a force to the steerable wheel. The steerable-wheel rotation-speed sensor detects the rotation speed of the steerable wheel. The drive-wheel rotation-speed sensor detects the rotation speed of the drive wheel.

In the leaning vehicle with these features, the moving-and-turning determination section may determine whether or not the leaning vehicle is moving and turning, based on the difference between the rotation speed of the drive wheel detected by the drive-wheel rotation-speed sensor and the rotation speed of the steerable wheel detected by the steerable-wheel rotation-speed sensor.

In the leaning vehicle regarding one embodiment of the present teaching, the steerable wheel of the leaning vehicle is positioned more frontward or more rearward than the drive wheel with respect to the frontward-rearward direction of the leaning vehicle, and the steerable wheel is steered when the rider performs a steering action and applies a force to the steerable wheel. There are no other limitations to the steerable wheel. The steering action is, for example, applying a force to the steerable wheel directly or indirectly to steer the steerable wheel.

In the leaning vehicle regarding one embodiment of the present teaching, the steerable-wheel rotation-speed sensor detects the rotation speed of the steerable wheel, and the drive-wheel rotation-speed sensor detects the rotation speed of the drive wheel. There are no other limitations to the steerable-wheel rotation-speed sensor and the drive-wheel rotation-speed sensor. Each of the steerable-wheel rotation-speed sensor and the drive-wheel rotation-speed sensor may be, for example, a sensor that uses a change of a magnetic flux passing through a coil, or the like.

The leaning vehicle according to the embodiment of the present teaching may further include a roll angle sensor or a roll rate sensor. The roll angle sensor detects the roll angle of the leaning vehicle, and the roll rate sensor detects the roll rate of the leaning vehicle.

In the leaning vehicle with this feature, the moving-and-turning determination section may determine whether or not the leaning vehicle is moving and turning, based on the roll angle of the leaning vehicle detected by the roll angle sensor or the roll rate of the leaning vehicle detected by the roll rate sensor.

In this case, the roll angle sensor detects the roll angle of the leaning vehicle, and there are no other limitations to the roll angle sensor. The roll angle sensor may be, for example, an inertial measurement unit (IMU).

The roll rate sensor detects the roll rate of the leaning vehicle, and there are no other limitations to the roll rate sensor. The roll rate sensor may be, for example, a gyroscope sensor.

The leaning vehicle according to the embodiment of the present teaching may further include a transmission and a gear position sensor. The transmission is positioned in the power transmission route from the drive source to the drive wheel. The transmission is operable by the rider. The gear position sensor detects the gear position of the transmission.

In the leaning vehicle with these features, when the gear position of the transmission detected by the gear position sensor is first, the drive-wheel rotation-speed acceleration assisting controller may increase the power transmitted from the drive source to the drive wheel without the rider performing the drive-wheel rotation-speed increasing operation and thereby increase the rotation speed of the drive wheel, whereby the moving speed of the leaning vehicle is accelerated, so that, in turn, there is an increase of centrifugal force acting on the leaning vehicle while the leaning vehicle is moving and turning left or right.

When the gear position of the transmission of this leaning vehicle is first, the speed of this leaning vehicle can be accelerated without the rider operating the acceleration operator. Accordingly, the leaning vehicle can be centrifugalized sufficiently while the leaning vehicle is turning. Thus, the leaning vehicle is easy to drive and turn at a low speed.

In the leaning vehicle with these features, the transmission positioned in the power transmission route from the drive source to the drive wheel and is operable by the rider. There are no other limitations to the transmission. The transmission may be operated by the rider directly or indirectly. The rider operating the transmission indirectly includes, for example, the rider operating a transmission operator and thereby operating the transmission. The transmission operator may be an element that the rider can operate by hand or an element that the rider can operate by foot. The transmission operator is, for example, a shift pedal that the rider can operate by foot.

In the leaning vehicle with these features, the gear position sensor detects the gear position of the transmission, and there are no other limitations to the gear position sensor. The gear position sensor is, for example, a non-contact gear position sensor. The non-contact gear position sensor is implemented, for example, by using a Hall element.

The leaning vehicle according to the embodiment of the present teaching may further include a vehicle-speed sensor that detects the moving speed of the leaning vehicle.

In this leaning vehicle with this feature, the drive-wheel rotation-speed acceleration assisting controller may include a vehicle-speed determination section. The vehicle-speed determination section determines if the moving speed of the leaning vehicle detected by the vehicle-speed sensor is surpassing a predetermined speed.

When the vehicle-speed determination section determines that the moving speed of the leaning vehicle detected by the vehicle-speed sensor is surpassing a predetermined speed, the drive-wheel rotation-speed acceleration assisting controller may increase the power transmitted from the drive source to the drive wheel without the rider performing the drive-wheel rotation-speed increasing operation and thereby increase the rotation speed of the drive wheel, whereby the moving speed of the leaning vehicle is accelerated, so that, in turn, there is an increase of centrifugal force acting on the leaning vehicle while the leaning vehicle is moving and turning.

In the leaning vehicle with these features, when the moving speed of the leaning vehicle detected by the vehicle-speed sensor is surpassing a predetermined speed, the moving speed of the leaning vehicle is accelerated without the rider operating the acceleration operator. Accordingly, the leaning vehicle can be centrifugalized sufficiently while the leaning vehicle is turning. Thus, the leaning vehicle is easy to drive and turn at a low speed.

In the leaning vehicle with these features, the vehicle-speed sensor detects the moving speed of the leaning vehicle, and there are no other limitations to the vehicle-speed sensor. The moving speed of the leaning vehicle may be detected, for example, based on the rotation speed of the drive wheel. The vehicle-speed sensor may detect the moving speed of the leaning vehicle itself or may detect any information that is needed for calculation of the moving speed of the leaning vehicle. Thus, how the vehicle-speed detects the moving speed of the leaning vehicle includes not only detecting the moving speed of the leaning vehicle directly but also detecting the moving speed of the leaning vehicle indirectly.

In the leaning vehicle according to the embodiment of the present teaching, the drive source may be an engine including a combustion chamber in which a gas mixture is used for combustion.

In this case, the engine includes a combustion chamber in which a gas mixture is used for combustion, and there are no other limitations to the engine. For example, the engine may be a single-cylinder engine or a multi-cylinder engine. In other words, the engine may include only one combustion chamber or may include a plurality of combustion chambers. Each of the combustion chambers of the engine may include, for example, a main combustion chamber and a subsidiary combustion chamber connected to the main combustion chamber. When the engine is a multi-cylinder engine, there are no limitations to the arrangement of the cylinders. The multi-cylinder engine may be a V engine, an in-line engine or a horizontally opposed engine. The engine may be a forward-tilted engine that has a cylinder axis tilting forward or a backward-tilted engine that has a cylinder axis tilting backward. The crankshaft axis of the engine may extend in the leftward-rightward direction of the leaning vehicle or the frontward-backward direction of the leaning vehicle. The engine may be, for example, a water-cooled engine, an oil-cooled engine or an air-cooled engine. The air-cooled engine may be a naturally cooled engine or a forcedly cooled engine. The engine may be, for example, a reciprocating engine or a rotary engine. The gas mixture is a mixture of intake air and fuel, and there are no other limitations to the gas mixture. The fuel may be, for example, fossil fuel or alcohol fuel. The fossil fuel may be, for example, gasoline or light oil. The alcohol fuel may be, for example, methanol, ethanol, butanol or propanol.

The leaning vehicle according to the embodiment of the present teaching may further include a clutch and a clutch operator. The clutch is positioned in the power transmission route from the drive source to the drive wheel, and the clutch is switchable between the power transmission allowing state and the power transmission interrupting state. When the clutch is in the power transmission allowing state, the power of the drive source is transmitted to the drive wheel. When the clutch is in the power transmission interrupting state, the power of the drive source is not transmitted to the drive wheel. The clutch operator is used to switch the clutch between the power transmission allowing state and the power transmission interrupting state. The clutch operator is operable by the rider. The rider does not need to operate the clutch operator to keep the clutch in the power transmission allowing state.

In the leaning vehicle with this feature, when the clutch is kept in the power transmission allowing state without the clutch operator operated by the rider, the drive-wheel rotation-speed acceleration assisting controller may increase the power transmitted from the drive source to the drive wheel without the rider performing the drive-wheel rotation-speed increasing operation and thereby increases the rotation speed of the drive wheel, whereby the moving speed of the leaning vehicle is accelerated, so that, in turn, there is an increase of centrifugal force acting on the leaning vehicle while the leaning vehicle is moving and turning left or right.

The leaning vehicle with this feature can accelerate the moving speed of the leaning vehicle without the rider operating the clutch operator or the acceleration operator. This reduces the burden of the rider to drive and turn the leaning vehicle and permits the leaning vehicle to be centrifugalized sufficiently during the turn. Thus, the leaning vehicle is easy to turn while moving at a low speed.

In the leaning vehicle with the feature, the clutch is positioned in the power transmission route from the drive source to the drive wheel and is switchable between the power transmission allowing state and the power transmission interrupting state, and there are no other limitations to the clutch. The clutch may be, for example, a dry-type clutch or a wet-type clutch.

In the leaning vehicle with the feature, the clutch operator is operable by the operator to switch the clutch between the power transmission allowing state and the power transmission interrupting state, and the rider does not need to operate the clutch operator to keep the clutch in the power transmission allowing state. There are no other limitations to the clutch operator. The clutch operator may be an element that the rider can operate by hand or an element that the rider can operate by foot. The clutch operator is, for example, a clutch lever that the rider can operate by hand.

A leaning vehicle according to another embodiment of the present teaching includes a main drive source, a main drive wheel, a leaning vehicle body, and an acceleration operator. The main drive wheel is rotated by a power transmitted from the main drive source. The leaning vehicle body supports the main drive source and the main drive wheel. When the leaning vehicle is turning left, the leaning vehicle body leans leftward by a force applied from a rider of the leaning vehicle due to a left turn action of the rider. When the leaning vehicle is turning right, the leaning vehicle body leans rightward by a force applied from a rider of the leaning vehicle due to a right turn action of the rider. The acceleration operator is operable by the rider to increase the power transmitted from the main drive source to the main drive wheel and thereby increase the rotation speed of the drive wheel, which is rotated by the power transmitted from the main drive source.

The leaning vehicle further includes a subsidiary drive source, a subsidiary drive wheel, a control unit, and a brake unit. The subsidiary drive wheel is rotated by a power transmitted from the subsidiary drive source. The control unit includes a subsidiary-drive-wheel rotation-speed acceleration assisting controller. The subsidiary-drive-wheel rotation-speed acceleration assisting controller increases the power transmitted from the subsidiary drive source to the subsidiary drive wheel without the rider performing a main drive-wheel rotation-speed increasing operation and thereby increases the rotation speed of the subsidiary drive wheel, whereby the moving speed of the leaning vehicle is accelerated, so that, in turn, there is an increase of centrifugal force acting on the leaning vehicle while the leaning vehicle is moving and turning. The main drive-wheel rotation-speed increasing operation is an operation that the rider performs toward the acceleration operator to increase the power transmitted from the drive source to the drive wheel and thereby increase the rotation speed of the drive wheel. The brake unit is operable by the rider to decelerate the moving speed of the leaning vehicle, and the brake unit decelerates the moving speed of the leaning vehicle even when the rotation speed of the drive wheel is increased caused by the increase of the power transmitted from the drive source, the increase of the power being performed by the drive-wheel rotation-speed acceleration controller.

In the leaning vehicle according to this embodiment of the present teaching, the moving speed of the leaning vehicle can be accelerated without the rider operating the acceleration operator. This reduces the burden of the rider to drive and turn the leaning vehicle and permits the leaning vehicle to be centrifugalized sufficiently during the turn. Thus, the leaning vehicle is easy to turn while moving at a low speed.

When the moving speed of the leaning vehicle is accelerated without the rider operating the acceleration operator, the moving speed of the leaning vehicle can be decelerated gradually by the rider's operation of the brake unit. Thus, the rider can adjust the moving speed of the leaning vehicle arbitrarily by his or her own volition.

The subsidiary-drive-wheel rotation-speed acceleration assisting controller may carry out the control while the rider is performing the main-drive-wheel rotation-speed increasing operation.

In the leaning vehicle according to this embodiment of the present teaching, the subsidiary drive source generates a power to be transmitted to the subsidiary drive wheel, and there are no other limitations to the subsidiary drive source. The subsidiary drive source is, for example, an in-wheel motor attached to the subsidiary drive wheel.

In the leaning vehicle according to this embodiment of the present teaching, the subsidiary drive wheel is rotated by a power transmitted from the subsidiary drive source, and there are no other limitations to the subsidiary drive wheel. The subsidiary drive wheel may be positioned, for example, in a different place, with respect to the frontward-rearward direction of the leaning vehicle, from the position of the main drive wheel. For example, the main drive wheel is a rear wheel, and the subsidiary drive wheel is a front wheel.

Some embodiments of the present teaching will hereinafter be described in detail with reference to the drawings, and the detailed description of the embodiments will provide a clearer picture of the above-mentioned objective and other objectives, the features, the aspects and the advantages of the present teaching.

The term "and/or" used herein includes one of the associated items in a list and all possible combinations of the associated items.

The terms "including", "comprising", or "having", and variations thereof used herein specify the presence of stated features, steps, operations, elements, components, and/or equivalents thereof, and can include one or more of steps, operations, elements, components, and/or their groups.

Unless otherwise defined, all terms (including technical and scientific terms) used herein have the same meanings as commonly understood by one of ordinary skill in the art to which the present teaching pertains.

It should be understood that terms, such as those defined in commonly used dictionaries, should be interpreted as having meanings that are consistent with their meanings in the context of the present disclosure and relevant art and should not be interpreted in an idealized or overly formal sense unless expressly so defined herein.

It should be understood that the description of the present teaching discloses a number of techniques and steps. Each of these has individual benefit, and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims.

In the description given below, for the purpose of explanation, numerous specific details are set forth in order to provide a complete understanding of the present teaching. It will be apparent, however, that those skilled in the art may practice the present teaching without these specific details. The present disclosure is to be considered as an exemplification of the present teaching and is not intended to limit the present teaching to the specific embodiments illustrated by drawings or descriptions below.

### Effect of Invention

The present teaching provides a leaning vehicle that is easy to turn while moving at a low speed.

### Brief Description of Drawings

[FIG. 1] FIG. 1 is a diagram including a left side view of a leaning vehicle according to an embodiment of the present teaching and a block diagram of a control system of the leaning vehicle.
[FIG. 2] FIG. 2 is a plan view of the leaning vehicle according to the embodiment of the present teaching.
[FIG. 3] FIG. 3 is a block diagram of a control unit of the leaning vehicle according to the embodiment of the present teaching.
[FIG. 4] FIG. 4 is a flowchart showing a procedure for drive-wheel rotation-speed acceleration assisting control carried out by the control unit of the leaning vehicle according to the embodiment of the present teaching.
[FIG. 5] FIG. 5 is a diagram including a left side view of a leaning vehicle according to Modification 1 of the embodiment of the present teaching and a block diagram of a control system of the leaning vehicle.
[FIG. 6] FIG. 6 is a block diagram of a control unit of the leaning vehicle according to Modification 1 of the embodiment of the present teaching.
[FIG. 7] FIG. 7 is a flowchart showing a procedure for drive-wheel rotation-speed acceleration assisting control carried out by the control unit of the leaning vehicle according to Modification 1 of the embodiment of the present teaching.
[FIG. 8] FIG. 8 is a diagram including a left side view of a leaning vehicle according to Modification 2 of the embodiment of the present teaching and a block diagram of a control system of the leaning vehicle.
[FIG. 9] FIG. 9 is a block diagram of a control unit of the leaning vehicle according to Modification 2 of the embodiment of the present teaching.
[FIG. 10] FIG. 10 is a flowchart showing a procedure for drive-wheel rotation-speed acceleration assisting control carried out by the control unit of the leaning vehicle according to Modification 2 of the embodiment of the present teaching.
[FIG. 11] FIG. 11 is a diagram including a left side view of a leaning vehicle according to Modification 3 of the embodiment of the present teaching and a block diagram of a control system of the leaning vehicle.
[FIG. 12] FIG. 12 is a block diagram of a control unit of the leaning vehicle according to Modification 3 of the embodiment of the present teaching.
[FIG. 13] FIG. 13 is a flowchart showing a procedure for drive-wheel rotation-speed acceleration assisting control carried out by the control unit of the leaning vehicle according to Modification 3 of the embodiment of the present teaching.
[FIG. 14] FIG. 14 is a diagram including a left side view of a leaning vehicle according to Modification 4 of the embodiment of the present teaching and a block diagram of a control system of the leaning vehicle.
[FIG. 15] FIG. 15 is a block diagram of a control unit of the leaning vehicle according to Modification 4 of the embodiment of the present teaching.
[FIG. 16] FIG. 16 is a flowchart showing a procedure for drive-wheel rotation-speed acceleration assisting control carried out by the control unit of the leaning vehicle according to Modification 4 of the embodiment of the present teaching.
[FIG. 17] FIG. 17 is a diagram including a left side view of a leaning vehicle according to Modification 5 of the embodiment of the present teaching and a block diagram of a control system of the leaning vehicle.
[FIG. 18] FIG. 18 is a block diagram of a control unit of the leaning vehicle according to Modification 5 of the embodiment of the present teaching.
[FIG. 19] FIG. 19 is a flowchart showing a procedure for drive-wheel rotation-speed acceleration assisting control carried out by a control unit of the leaning vehicle according to Modification 5 of the embodiment of the present teaching.
[FIG. 20] FIG. 20 is a diagram including a left side view of a leaning vehicle according to another embodiment of the present teaching and a block diagram of a control system of the leaning vehicle.
[FIG. 21] FIG. 21 is a block diagram of a control unit of the leaning vehicle according to another embodiment of the present teaching.
[FIG. 22] FIG. 22 is a flowchart showing a procedure for drive-wheel rotation-speed acceleration assisting control carried out by the control unit of the leaning vehicle according to another embodiment of the present teaching.
[FIG. 23] FIG. 23 is a graph showing the relationship between the moving speed of a leaning vehicle and the roll response time according to an embodiment of the present teaching.
[FIG. 24] FIG. 24 is a graph showing the relationship between the moving speed of a leaning vehicle and the extreme value of the roll rate according to an embodiment of the present teaching.

### Description of Embodiments

Leaning vehicles according to some embodiments of the present teaching will hereinafter be described in detail with reference to the drawings. The embodiments described below are merely examples. The present teaching shall not be understood to be limited to the embodiments below.

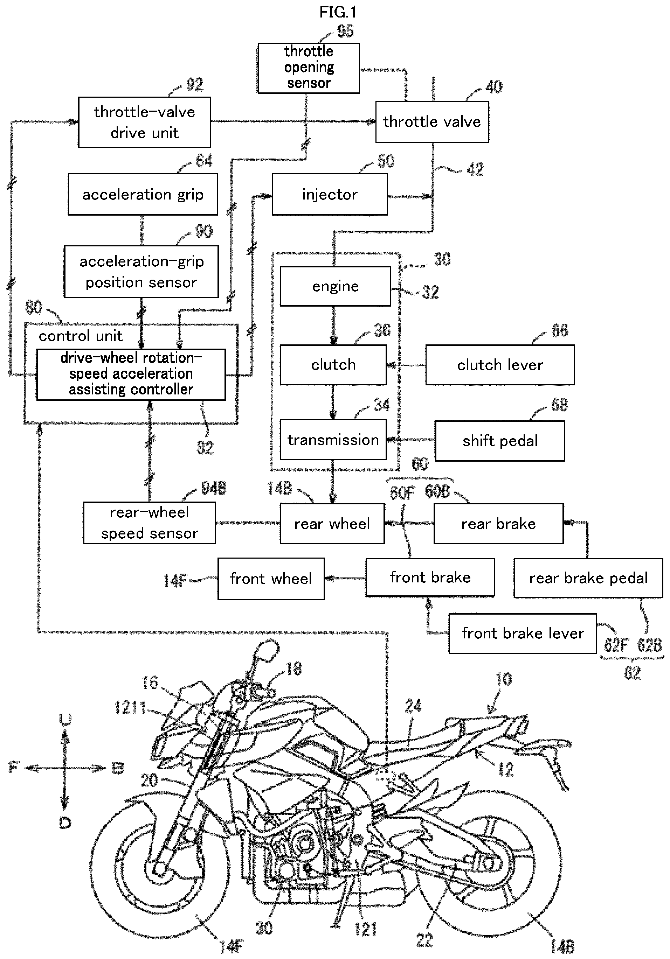

With reference to FIG. 1, a leaning vehicle 10 according to an embodiment of the present teaching will be described. FIG. 1 shows a left side view of the leaning vehicle 10 and a block diagram of a control system of the leaning vehicle 10.

In the present description, directions relative to the leaning vehicle 10 are defined as follows.

Forward of the leaning vehicle 10 is referred to as vehicle-forward direction F. Backward of the leaning vehicle 10 is referred to as vehicle-backward direction B. Leftward of the leaning vehicle 10 is referred to as vehicle-leftward direction L. Rightward of the leaning vehicle 10 is referred to as vehicle-rightward direction R. Upward of the leaning vehicle 10 is referred to as vehicle-upward direction U. Downward of the leaning vehicle 10 is referred to as vehicle-downward direction D. The forward-backward direction of the leaning vehicle 10 is defined as Vehicle-Front-Back Direction FB. The leftward-rightward direction of the leaning vehicle 10 is defined as Vehicle-Left-Right Direction LR. The upward-downward direction of the leaning vehicle 10 is defined as Vehicle-Up-Down Direction UD. These directions (forward or frontward, backward or rearward, leftward, rightward, upward and downward directions) are directions from the perspective of a rider sitting on the seat 24 of the leaning vehicle 10.

The leaning vehicle 10 includes a vehicle body 12 that is capable of leaning vehicle-leftward direction L and vehicle-rightward direction R. When the vehicle body 12 leans vehicle-leftward direction L or vehicle-rightward direction R, both the upward-downward direction and the leftward-rightward direction of the vehicle body 12 are not the same with Upward-Downward Direction UD and Leftward-Rightward Direction LR of the leaning vehicle 10. However, when the vehicle body 12 is upright, the upward-downward direction and the leftward-rightward direction of the vehicle body 12 are the same with Upward-Downward Direction UD and Leftward-Rightward Direction LR of the leaning vehicle 10, respectively.

The leaning vehicle 10 is a motorcycle that is a straddled vehicle. The leaning vehicle 10 includes a front wheel 14F and a rear wheel 14B in addition to the vehicle body 12, which is a leaning vehicle body.

The vehicle body 12 supports the front wheel 14F and the rear wheel 14B in such a manner that the front wheel 14F and the rear wheel 14B are rotatable. When the leaning vehicle 10 turns vehicle-left L, the leaning vehicle body 12 causes both the front wheel 14 and the rear wheel 14B to lean vehicle-leftward direction L by a force applied from the rider due to a left action of the rider. When the leaning vehicle 10 turns vehicle-right R, the leaning vehicle body 12 causes both the front wheel 14F and the rear wheel 14B to lean vehicle-rightward direction R by a force applied from the rider due to a right action of the rider.

The vehicle body 12 includes a vehicle body frame 121. The vehicle body frame 121 includes a head pipe 1211. The head pipe 1211 is positioned in the front-end part of the vehicle body frame 121.

The leaning vehicle 10 further includes a steering shaft 16, a handlebar 18, and a front fork 20. The steering shaft 16 is inserted in the head pipe 1211. The handlebar 18 is positioned at the upper end of the steering shaft 16. The front fork 20 is positioned at the lower end of the steering shaft 16. The front fork 20 supports the front wheel 14F in such a manner that the front wheel 14F is rotatable.

When the handlebar 18 is operated, the steering shaft 16 is rotated. Along with the rotation of the steering shaft 16, the front fork 20 rotates. Then, the front wheel 12F is steered. Thus, the front wheel 12F is a steerable wheel.

The leaning vehicle 10 further includes a rear arm 22. The rear arm 22 is swingable relative to the vehicle body frame 121. The rear arm 22 supports the rear wheel 14B in such a manner that the rear wheel 14B is rotatable. Additionally, the rear wheel 14B is entirely positioned more rearward than the front wheel 14F.

The leaning vehicle 10 further includes a seat 24. The seat 24 is supported by the vehicle body frame 121. The rider of the leaning vehicle 10 sits on the seat 24 while driving the leaning vehicle 10.

The leaning vehicle 10 further includes a power unit 30. The power unit 30 is supported by the vehicle body frame 121. The rear wheel 14B is rotated by a power supplied from the power unit 30. Thus, the rear wheel 14B is a drive wheel.

The power unit 30, for example, includes an engine 32 working as a drive source, a transmission 34, and a clutch 36. These will be described below.

The engine 32 includes a combustion chamber in which a gas mixture is used for combustion. The gas mixture in the combustion chamber is ignited by spark discharge generated by an ignition plug. The gas mixture is a mixture of intake air and fuel. The engine 32 is, for example, a four-stroke engine. A four-stroke engine repeats an intake step, a compression step, a combustion step (an expansion step) and an exhaust step. In such a four-stroke engine, the intake step, compression step, combustion step (expansion step) and exhaust step are defined as one cycle.

The transmission 34 is capable of changing the torque and the rotation speed transmitted from the engine 32 to the rear wheel 14B in accordance with the running conditions. The transmission 34 is positioned in the power transmission route from the engine 32 to the rear wheel 14B. In other words, the transmission 34 is positioned between the engine 23 and the rear wheel 14B.

The transmission 34 is capable of changing the torque and the rotation speed transmitted from the engine 32 to the rear wheel 14B by changing the combination of gears in accordance with the rider's operation of a shift pedal 68, which will be described later. Thus, the transmission 34 is what is called a manual transmission.

The clutch 36 is switchable between a power transmission allowing state and a power transmission interrupting state. In the power transmission allowing state, the output power of the engine 32 is transmitted to the rear wheel 14B. In the power transmission interrupting state, the output power of the engine 32 is not transmitted to the rear wheel 14B. The clutch 36 is positioned in the power transmission route from the engine 32 to the rear wheel 14B. In other words, the clutch 36 is positioned between the engine 32 and the rear wheel 14B. More specifically, the clutch 36 is positioned between the engine 32 and the transmission 34.

The clutch 36 is switched between the power transmission allowing state and the power transmission interrupting state in accordance with the rider's operation of a clutch lever 66, which will be described later. The clutch 36 is kept in the power transmission allowing state unless the rider operates the clutch lever 66.

The leaning vehicle 10 further includes a throttle valve 40. The throttle valve 40 is positioned in an intake passage 42 in which intake air sucked in from the atmosphere flows to the combustion chamber of the engine 32.

The throttle valve 42 is placed in the intake passage 42 in such a manner as to be rotatable around a specified rotation axis so as to adjust the amount of intake air flowing toward the combustion chamber of the engine 32. The specified rotation axis extends in a direction perpendicular to the direction of intake air flow in the intake passage 42. The adjustment of the amount of intake air flowing toward the combustion chamber of the engine 32 is implemented, for example, by rotating the throttle valve 40 around the rotation axis and thereby changing the passage cross-sectional area of the intake passage 42.

The throttle valve 40 works along with operation of an acceleration grip 64 working as an acceleration operator, which will be described later. Specifically, when the acceleration grip 64 is rotated in a first direction, the throttle valve 40 is actuated to increase the amount of intake air flowing in the outer intake passage 42. When the acceleration grip 64 is rotated in a second direction which is opposite to the first direction, the throttle valve 40 is actuated to decrease the amount of intake air flowing in the outer intake passage 42. Thus, the throttle valve 40 adjusts the amount of intake air flowing in the intake passage 42 in accordance with operation of the acceleration grip 64. The degree of opening of the throttle valve 40 is changed in accordance with the degree of rotation in the first direction of the acceleration grip 64.

The leaning vehicle 10 further includes an injector 50. The injector 50 sprays fuel toward the intake air flowing in the intake passage 42. The injector 50 adjusts the amount of fuel sprayed in accordance with the degree of opening of the throttle valve 40. The injector 50 is positioned between the throttle valve 40 and the combustion chamber of the engine 32.

The leaning vehicle 10 further includes a brake unit 60 and a brake operator 62 in addition to the acceleration grip 64 working as an acceleration operator, the clutch lever 66 working as a clutch operator and the shift pedal 68 working as a transmission operator. The brake unit 60 includes a front brake 60F and a rear brake 60B. The brake operator 62 includes a front brake lever 62F and a rear brake pedal 62B.

The front brake 60F reduces the rotation speed of the front wheel 14F. Accordingly, the front brake 60F reduces the moving speed of the leaning vehicle 10. The front brake 60F converts kinetic energy obtained by rotation of the front wheel 14F into thermal energy by friction. The front brake 60F is, for example, a disc brake.

The rider operates the front brake lever 62F to reduce the rotation speed of the front wheel 14F by means of the front brake 60F. The position of the front brake lever 62F will be described later.

The rear brake 60B reduces the rotation speed of the rear wheel 14B. Accordingly, the rear brake 60B reduces the moving speed of the leaning vehicle 10. The rear brake 60B converts kinetic energy obtained by rotation of the rear wheel 14B into thermal energy by friction. The rear brake 60B is, for example, a disc brake.

The rider operates the rear brake pedal 62B to reduce the rotation speed of the rear wheel 14B by means of the rear brake 60B. The position of the rear brake pedal 62B will be described later.

The acceleration grip 64 is used to increase the power outputted from the engine 32. When the rider operates the acceleration grip 64, the power outputted from the engine 32 increases. In other words, when the rider operates the acceleration grip 64, the output power of the engine 32 increases. When the power outputted from the engine 32 increases, the rotation speed of the rear wheel 14B increases. The position of the acceleration grip 64 will be described later.

The clutch lever 66 is used to switch the clutch 36 to either the power transmission allowing state or the power transmission interrupting state. In order to switch the clutch 36 to either the power transmission allowing state or the power transmission interrupting state, the rider operates the clutch lever 66. The rider does not need to operate the clutch lever 66 to keep the clutch 36 in the power transmission allowing state. The position of the clutch lever 66 will be described later.

The shift pedal 68 is used to change the combination of gears in the transmission 34. The shift pedal 68 is operated by the rider when the combination of gears is changed in the transmission 34.

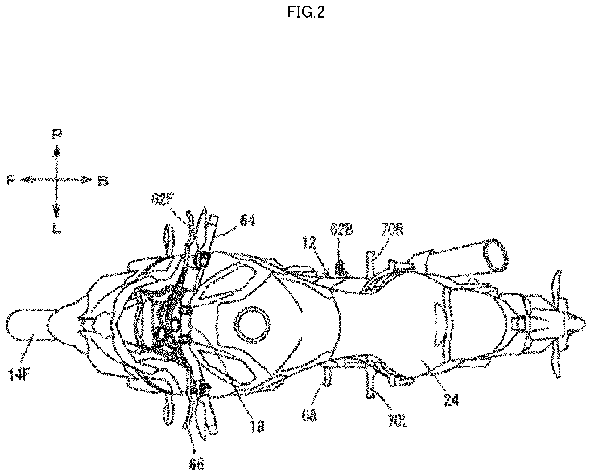

With reference to FIG. 2, the leaning vehicle 10 will be described in more detail. FIG. 2 is a plan view of the leaning vehicle 10.

The leaning vehicle 10 further includes a left footrest 70L and a right footrest 70R. These will be described below.

The rider sitting on the seat 24 puts his or her left foot on the left footrest 70L. Thus, the left footrest 70L is positioned such that the rider sitting on the seat 24 can put his or her left foot on the left footrest 70L. The left footrest 70L is fixed to the vehicle body frame 121. The left footrest 70L extends in Vehicle-Left-Right Direction LR.

The rider sitting on the seat 24 puts his or her right foot on the right footrest 70R. Thus, the right footrest 70R is positioned such that the rider sitting on the seat 24 can put his or her right foot on the right footrest 70R. The right footrest 70R is fixed to the vehicle body frame 121. The right footrest 70R extends in Vehicle-Left-Right Direction LR.

The front brake lever 62F extends in Vehicle-Left-Right Direction LR. The front brake lever 62F is attached to the handlebar 18 in such a manner as to be swingable in Vehicle-Front-Back Direction FB around its own left end. In a vehicle-plane view or a vehicle-bottom view via Vehicle-Up-Down Direction UD, the front brake lever 62F is positioned more frontward than the right part of the handlebar 18. The front brake lever 62F is located near the right grip of the handlebar 18. Therefore, the rider can operate the front brake lever 62F while holding the right grip of the handlebar 18. Thus, the front brake lever 62F is placed in a position to be operable by the rider.

The rear brake pedal 62B extends in Vehicle-Front-Back Direction FB. The rear brake pedal 62B is attached to the vehicle body frame 121 in such a manner as to be swingable in Vehicle-Up-Down Direction UD around its own rear end. In a vehicle-plane view or a vehicle-bottom view via Vehicle-Up-Down Direction UD, the rear brake pedal 62B is positioned more frontward than the right footrest 70R. Therefore, the rider can operate the rear brake pedal 62B while keeping his or her right foot on the right footrest 70R. Thus, the rear brake pedal 62B is placed in a position to be operable by the rider.

The acceleration grip 64 extends in Vehicle-Left-Right Direction LR. The acceleration grip 64 is attached to the right part of the handlebar 18. The acceleration grip 64 is the right grip of the handlebar 18. The rider can operate the acceleration grip 64 while driving the leaning vehicle 10. Thus, the acceleration grip 64 is placed in a position to be operable by the rider.

The clutch lever 66 extends in Vehicle-Left-Right Direction LR. The clutch lever 66 is attached to the handlebar 18 in such a manner as to be swingable in Vehicle-Front-Back Direction FB around its own right end. In a vehicle-plane view or a vehicle-bottom view via Vehicle-Up-Down Direction UD, the clutch lever 66 is positioned more frontward than the left part of the handlebar 18. The clutch lever 66 is located near the left grip of the handlebar 18. Therefore, the rider can operate the clutch lever 66 while holding the left grip of the handlebar 18. Thus, the clutch lever 66 is placed in a position to be operable by the rider.

The shift pedal 68 extends in Vehicle-Front-Back Direction FB. The shift pedal 66 is attached to the vehicle body frame 121 in such a manner as to be swingable in Vehicle-Up-Down Direction UD around its own rear end. In a vehicle-plane view or a vehicle-bottom view via Vehicle-Up-Down Direction UD, the front-end part of the shift pedal 68 is positioned more frontward than the left footrest 70L. Therefore, the rider can operate the shift pedal 68 while keeping his or her left foot on the left footrest 70L. Thus, the shift pedal 68 is placed in a position to be operable by the rider.

With reference to FIG. 1, the leaning vehicle 10 will be described in more detail. The leaning vehicle 10 further includes a control unit 80. The control unit 80 increases the power to be transmitted from the engine 32 to the rear wheel 14B in accordance with the rider's operation of the acceleration grip 64 and thereby accelerates the rotation speed of the rear wheel 14B. The control unit 80 is, for example, an ECU (electric control unit). The ECU is implemented, for example, by a combination of an IC (integrated circuit), an electronic component, a circuit board, and the like.

The control unit 80 includes a drive-wheel rotation-speed acceleration assisting controller 82. The drive-wheel rotation-speed acceleration assisting controller 82 is implemented, for example, when a CPU (central processing unit) reads a program stored in an involatile memory and executes a predetermined process according to the program.

The drive-wheel rotation-speed acceleration assisting controller 82 increases the output of the engine 32 and thereby increases the rotation speed of the rear wheel 14B, even without the rider performing a drive-wheel rotation-speed increasing operation, whereby the moving speed of the leaning vehicle 10 is accelerated, so that, in turn, there is an increase of centrifugal force acting on the leaning vehicle 10 while the leaning vehicle 10 is turning. The drive-wheel rotation-speed increasing operation is an operation that the rider performs toward the acceleration grip 64 to increase the rotation speed of the rear wheel 14B. Specifically, an operation to rotate the acceleration grip 64 in the first direction corresponds to the drive-wheel rotation-speed increasing operation. In an exemplary embodiment, the leaning vehicle 10 is capable of moving without the rider performing the drive-wheel rotation-speed increasing operation at a speed of 5 to 20 km/h.

The leaning vehicle 10 further includes an acceleration-grip position sensor 90, a throttle-valve drive unit 92, a rear-wheel speed sensor 94B working as a drive-wheel rotation-speed sensor, and the throttle opening sensor 95. These will be described below.

The acceleration-grip position sensor 90 detects the angle of rotation of the acceleration grip 64 from its initial position, i.e., the amount of operation of the acceleration grip 64. The acceleration-grip position sensor 90 sends a detection result on the amount of operation of the acceleration grip 64 to the control unit 80.

The throttle-valve drive unit 92 drives the throttle valve 40 in accordance with a signal sent from the control unit 80. The throttle-valve drive unit 92, for example, includes an electric motor and a decelerating mechanism.

The rear-wheel speed sensor 94B detects the rotation speed of the rear wheel 14B. The rear-wheel speed sensor 94B sends a detection result on the rotation speed of the rear wheel 14B to the control unit 80.

The throttle opening sensor 95 detects the degree of throttle opening, i.e., the degree of opening of the throttle valve 40. The throttle opening sensor 95 sends a detection result on the degree of throttle opening to the control unit 80.

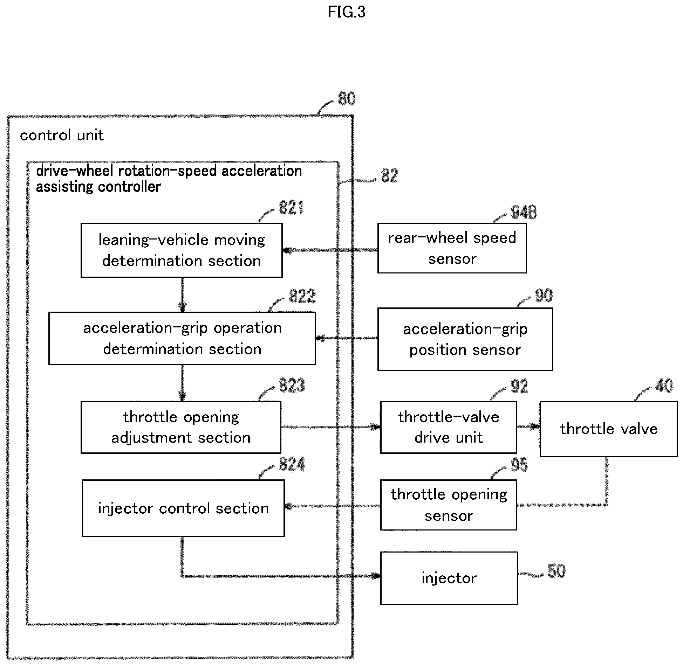

With reference to FIG. 3, the control unit 80 will be described. FIG. 3 is a block diagram of the control unit 80.

The drive-wheel rotation-speed acceleration assisting controller 82 includes a leaning-vehicle moving determination section 821, an acceleration-grip operation determination section 822, a throttle opening adjustment section 823, and an injector control section 824. Each of the leaning-vehicle moving determination section 821, the acceleration-grip operation determination section 822, the throttle opening adjustment section 823, and the injector control section 824 is implemented, for example, when the CPU (central processing unit) reads a program stored in the involatile memory and executes a predetermined process according to the program.

The leaning-vehicle moving determination section 821 determines whether or not the leaning vehicle 10 is moving, based on the rotation speed of the rear wheel 14B sent from the rear-wheel speed sensor 94B.

The acceleration-grip operation determination section 822 determines whether or not the acceleration grip 64 is operated, based on the amount of operation of the acceleration grip 64 sent from the acceleration-grip position sensor 90.

When the leaning vehicle 10 is moving and when the acceleration grip 64 is not operated, the throttle opening adjustment section 823 actuates the throttle valve 40 such that the throttle opening becomes a predetermined degree of throttle opening. Specifically, the throttle opening adjustment section 823 sends a signal to the throttle-valve drive unit 92, and the throttle-valve drive unit 92 drives the throttle valve 40 in accordance with the signal.

The injector control section 824 sets an amount of fuel spray in accordance with a signal that is sent from the throttle opening sensor 95 and that indicates the degree of throttle opening. The injector control section 824 further controls the injector 50 such that the injector 50 sprays the set amount of fuel. The injector control section 824 may set the amount of fuel spray, for example, by reference to not only the signal sent from the throttle opening sensor 95 but also signals sent from other sensors.

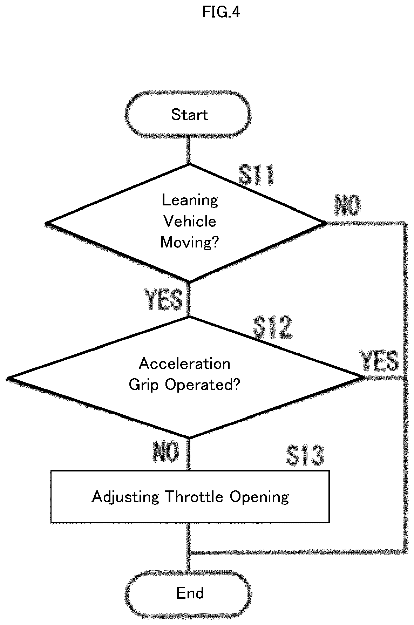

With reference to FIG. 4, drive-wheel rotation-speed acceleration assisting control carried out by the control unit 80 will be described. FIG. 4 is a flowchart showing a procedure for the drive-wheel rotation-speed acceleration assisting control carried out by the control unit 80.

The control unit 80 first determines at step S11 whether or not the leaning vehicle 10 is moving. This determination is made based on the rotation speed of the rear wheel 14B sent from the rear-wheel speed sensor 94B.

When the leaning vehicle 10 is not moving (NO at step S11), the control unit 80 terminates the drive-wheel rotation-speed acceleration assisting control. When the leaning vehicle 10 is moving (YES at step S11), at step S12, the control unit 80 determines whether or not the acceleration grip 64 is operated. This determination is made based on the amount of operation of the acceleration grip 64 sent from the acceleration-grip position sensor 90.

When the acceleration grip 64 is operated (YES at step S12), the control unit 80 terminates the drive-wheel rotation-speed acceleration assisting control. When the acceleration grip 64 is not operated (NO at step S12), at step S13, the control unit 80 sends a signal for adjustment of the throttle opening to the throttle-valve drive unit 92. This signal is a signal for shifting the throttle valve 40 to a non-fully closed state even when the acceleration grip 64 is not operated. Specifically, this signal is a signal for shifting the throttle valve from the fully closed position to a slightly open position and keeping it there when the acceleration grip 64 is not operated. The throttle-valve drive unit 92 adjusts the throttle opening in accordance with this signal. Then, the control unit 80 completes the drive-wheel rotation-speed acceleration assisting control.

In the procedure shown in FIG. 4, the determination at step S12 as to "whether or not the acceleration grip 64 is operated" may be replaced with, for example, a determination as to "whether or not the vehicle moving speed is equal to or greater than a predetermined speed" or a determination as to "whether or not the shift position is first". When the vehicle moving speed is equal to or greater than the predetermined speed or when the shift position is not first, the processing at step S13 is not carried out.

When the throttle opening is adjusted in the above-described way, the input signal sent from the throttle opening sensor 95 changes. Accordingly, the amount of fuel spray set by the injector control section 824 changes. Specifically, the amount of fuel spray set by the injector control section 824 after the adjustment of the throttle opening becomes greater than the amount of fuel spray when the throttle valve 40 is fully closed. Thereby, the speed of the engine 32 increases.

When the speed of the engine 32 increases in this way, the power to be transmitted to the rear wheel 14B becomes greater. In this state, unless the rider operates the clutch lever 66, that is, as long as the clutch 36 is kept connected, a greater power can be transmitted from the engine 32 to the rear wheel 14B. As a result, the rotation speed of the rear wheel 14B can be increased so that the leaning vehicle 10 can move at a low speed.

In this way, while the leaning vehicle 10 is moving, the speed of the engine 32 can be increased without the rider operating the acceleration grip 64. Specifically, when the clutch 36 is kept connected without the rider operating the clutch lever 66, it is possible to drive the leaning vehicle 10 at a low speed (for example, 10 km/h or lower). In this state, even when the leaning vehicle 10 is turned, it is possible to centrifugalize the leaning vehicle 10 sufficiently during the turn. Therefore, the rider no longer needs to operate the acceleration grip 64 or the clutch lever 66 when turning the leaning vehicle 10. Accordingly, the rider's burden to drive and turn the leaning vehicle 10 can be reduced. Thus, it is easy to drive and turn the leaning vehicle 10 at a low speed.

Additionally, the rider can decelerate the moving speed of the leaning vehicle 10 by operating the front brake lever 62F or the rear brake pedal 62B. Therefore, when turning the leaning vehicle 10, the rider can adjust the moving speed of the leaning vehicle 10 during the turn. Thus, the rider can operate the front brake lever 62F and the rear brake pedal 62B to decelerate the moving speed of the leaning vehicle 10 even when not operating the acceleration grip 64 or the clutch lever 64.

Especially, the rider can decelerate the moving speed of the leaning vehicle 10 only by operating the rear brake pedal 62b with his or her right foot. In other words, the rider does not need to operate the front brake lever 62F to decelerate the moving speed of the leaning vehicle 10 during a turn. Thus, it is possible to reduce the burden on the rider when the leaning vehicle 10 is turned.

### (Modification 1)

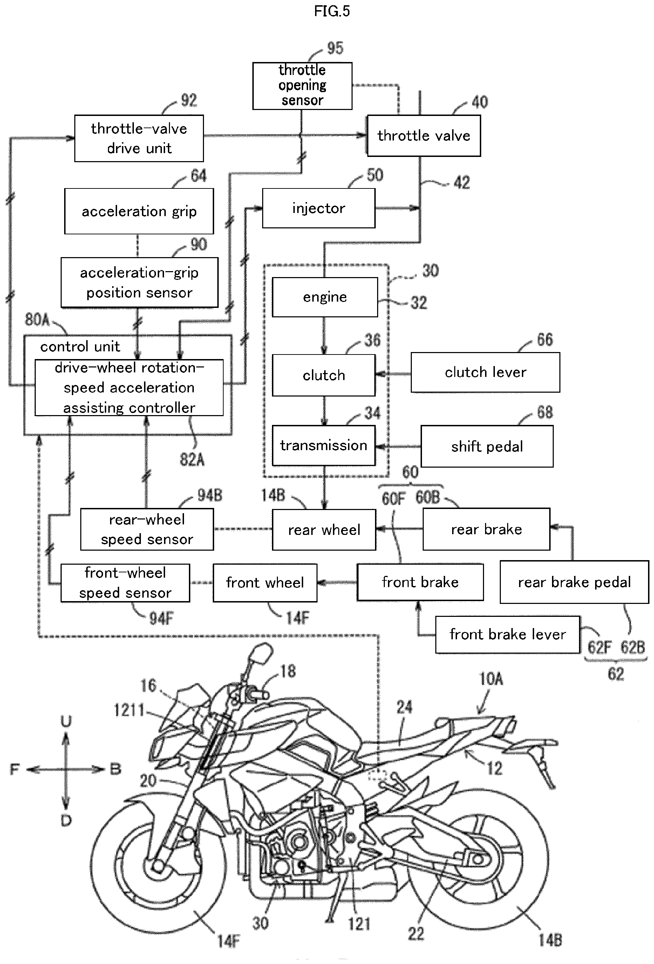

With reference to FIG. 5, a leaning vehicle 10A according to Modification 1 of the embodiment of the present teaching will be described. FIG. 5 is a diagram including a left side view of the leaning vehicle 10A and a block diagram of a control system of the leaning vehicle 10A.

The leaning vehicle 10A is different from the leaning vehicle 10 in that the leaning vehicle 10A further includes a front-wheel speed sensor 94F working as a steerable-wheel rotation-speed sensor. The front-wheel speed sensor 94F detects the rotation speed of the front wheel 14F. The front-wheel speed sensor 94F sends a detection result on the rotation speed of the front wheel 14F to a control unit 80A.

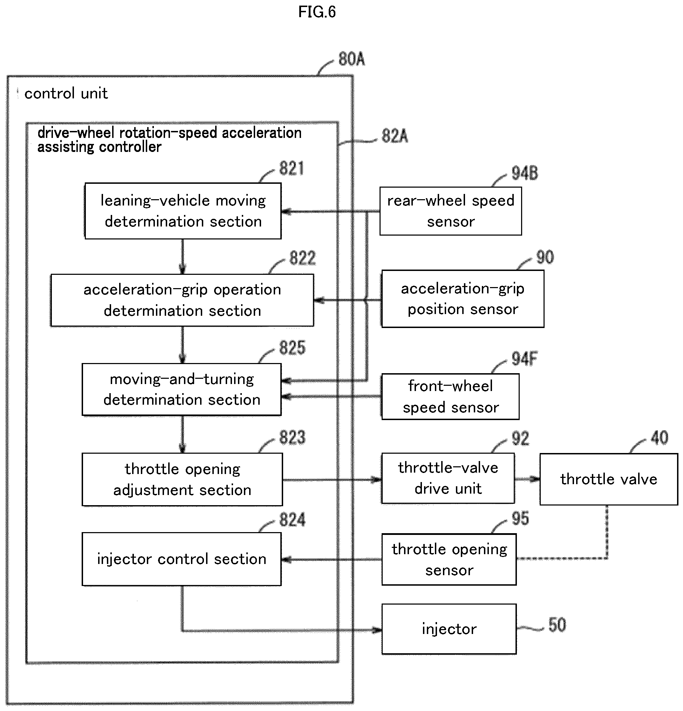

The leaning vehicle 10A is different from the leaning vehicle 10 also in that the control unit 80A is used instead of the control unit 80. With reference to FIG. 6, the control unit 80A will be described. FIG. 6 is a block diagram of the control unit 80A.

The control unit 80A is different from the control unit 80 in that the control unit 80A includes a drive-wheel rotation-speed acceleration assisting controller 82Ainstead of the drive-wheel rotation-speed acceleration assisting controller 82. The drive-wheel rotation-speed acceleration assisting controller 82A is different from the drive-wheel rotation-speed acceleration assisting controller 82 in that the drive-wheel rotation-speed acceleration assisting controller 82A further includes a moving-and-turning determination section 825. The moving-and-turning determination section 825 determines whether or not the leaning vehicle 10A is moving and turning, based on the rotation speed difference between the rotation speed of the front wheel 14F detected by the front-wheel speed sensor 94F and the rotation speed of the rear wheel 14B detected by the rear-wheel speed sensor 94B. Specifically, when the rotation speed difference between the rotation speed of the front wheel 14F detected by the front-wheel speed sensor 94F and the rotation speed of the rear wheel 14B detected by the rear-wheel speed sensor 94B is greater than a predetermined value, the moving-and-turning determination section 825 determines that the leaning vehicle 10A is moving and turning. The moving-and-turning determination section 825 is implemented, for example, when the CPU (central processing unit) reads a program stored in a non-volatile memory and executes a predetermined process according to the program.

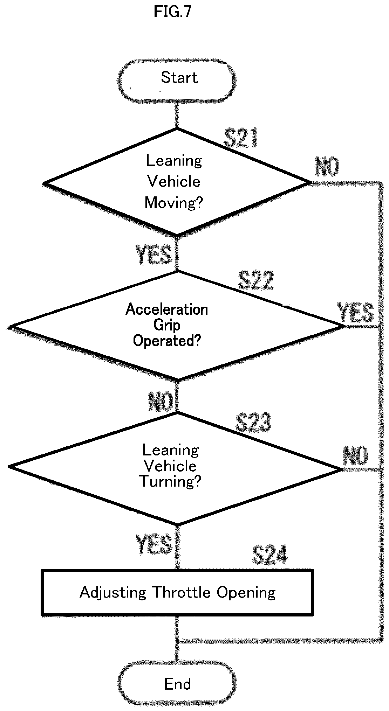

Next, with reference to FIG. 7, drive-wheel rotation-speed acceleration assisting control carried out by the control unit 80A will be described. FIG. 7 is a flowchart showing a procedure for the drive-wheel rotation-speed acceleration assisting control carried out by the control unit 80A.

First, at step S21, the control unit 80A determines whether or not the leaning vehicle 10A is moving. This determination is made based on the rotation speed of the rear wheel 14B sent from the rear-wheel speed sensor 94B.

When the leaning vehicle 10A is not moving (NO at step S21), the control unit 80A terminates the drive-wheel rotation-speed acceleration assisting control. When the leaning vehicle 10A is moving (YES at step S21), at step S22, the control unit 80A determines whether or not the acceleration grip 64 is operated. This determination is made based on the amount of operation of the acceleration grip 64 sent from the acceleration-grip position sensor 90.

When the acceleration grip 64 is operated (YES at step S22), the control unit 80A terminates the drive-wheel rotation-speed acceleration assisting control. When the acceleration grip 64 is not operated (NO at step S22), at step S23, the control unit 80A determines whether or not the leaning vehicle 10A is turning. This determination is made based on the rotation speed difference between the rotation speed of the front wheel 14F detected by the front-wheel speed sensor 94F and the rotation speed of the rear wheel 14B detected by the rear-wheel speed sensor 94B.

When the leaning vehicle 10A is not turning (NO at step S23), the control unit 80A terminates the drive-wheel rotation-speed acceleration assisting control. When the leaning vehicle 10A is turning (YES at step S23), at step S24, the control unit 80A sends a signal for adjustment of the throttle opening to the throttle-valve drive unit 92. The throttle-valve drive unit 92 adjusts the throttle opening in accordance with this signal. Then, the control unit 80A completes the drive-wheel rotation-speed acceleration assisting control.

In the procedure shown in FIG. 7, the determination at step S22 as to "whether or not the acceleration grip 64 is operated" may be replaced with, for example, a determination as to "whether or not the vehicle moving speed is equal to or greater than a predetermined speed" or a determination as to "whether or not the shift position is first." When the vehicle moving speed is equal to or greater than the predetermined speed or when the shift position is not first, the processing at step S24 is not carried out.

When the throttle opening is adjusted in the above-described way, the input signal sent from the throttle opening sensor 95 changes. Accordingly, the amount of fuel spray set by the injector control section 824 changes. Specifically, the amount of fuel spray set by the injector control section 824 after the adjustment of the throttle opening becomes greater than the amount of fuel spray when the throttle valve 40 is fully closed. Thereby, the speed of the engine 32 increases.

When the speed of the engine 32 increases in this way, the power to be transmitted to the rear wheel 14B becomes greater. In this state, unless the rider operates the clutch lever 66, that is, as long as the clutch 36 is kept connected, a greater power can be transmitted from the engine 32 to the rear wheel 14B. As a result, the rotation speed of the rear wheel 14B can be increased so that the leaning vehicle 10A can move at a low speed.

As with the case of the leaning vehicle 10, the leaning vehicle 10A is easy to drive and turn at a low speed.

In the leaning vehicle 10A, in the procedure for the drive-wheel rotation-speed acceleration assisting control, the control unit 80A determines especially whether or not the leaning vehicle 10A is turning. Therefore, only when the leaning vehicle 10A is turning, the speed of the engine 32 can be increased without the rider operating the acceleration grip 64.

### (Modification 2)

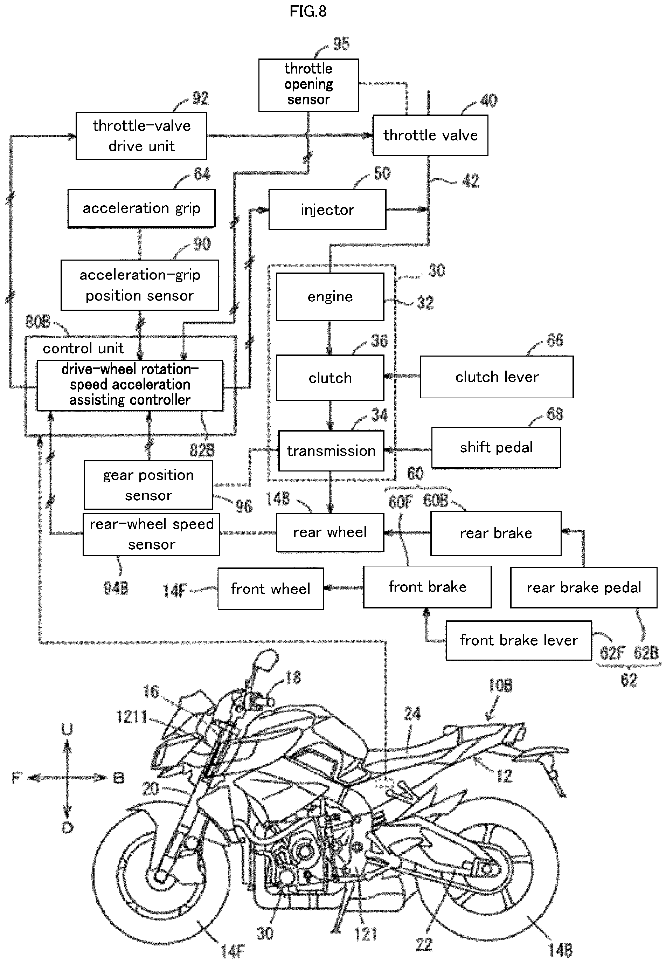

With reference to FIG. 8, a leaning vehicle 10B according to Modification 2 of the embodiment of the present teaching will be described. FIG. 8 is a diagram including a left side view of the leaning vehicle 10B and a block diagram of a control system of the leaning vehicle 10B.

The leaning vehicle 10B is different from the leaning vehicle 10 in that the leaning vehicle 10B further includes a gear position sensor 96. The gear position sensor 96 detects the gear position of the transmission 34. The gear position sensor 96 sends a detection result on the gear position of the transmission 34 to a control unit 80B.

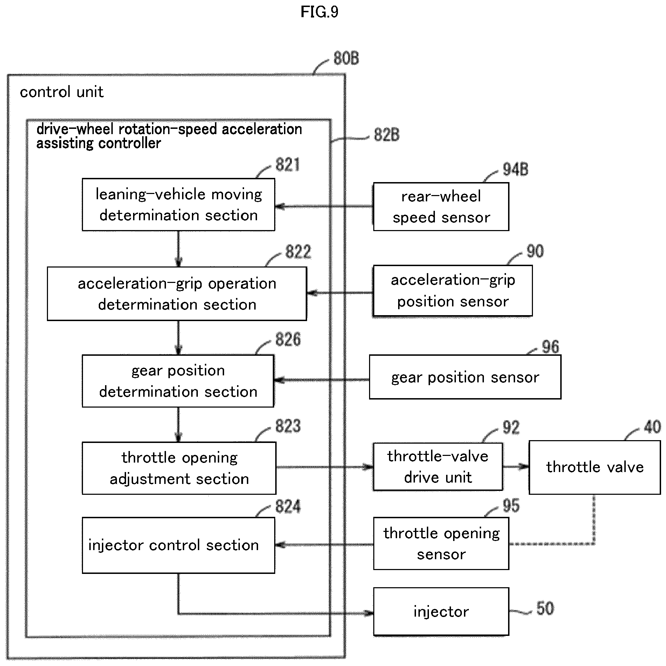

The leaning vehicle 10B is different from the leaning vehicle 10 also in that the control unit 80B is used instead of the control unit 80. With reference to FIG. 9, the control unit 80B will be described. FIG. 9 is a block diagram of the control unit 80B.

The control unit 80B is different from the control unit 80 in that the control unit 80B includes a drive-wheel rotation-speed acceleration assisting controller 82B instead of the drive-wheel rotation-speed acceleration assisting controller 82. The drive-wheel rotation-speed acceleration assisting controller 82B is different from the drive-wheel rotation-speed acceleration assisting controller 82 in that the drive-wheel rotation-speed acceleration assisting controller 82B further includes a gear position determination section 826. The gear position determination section 826 determines whether or not the gear position of the transmission 34 is first, based on the gear position of the transmission 34 detected by the gear position sensor 96. The gear position determination section 826 is implemented, for example, when the CPU (central processing unit) reads a program stored in the non-volatile memory and executes a predetermined process according to the program.

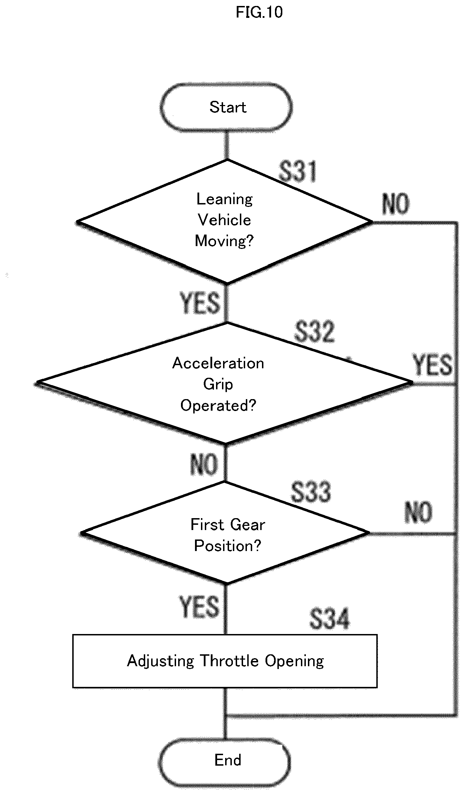

With reference to FIG. 10, drive-wheel rotation-speed acceleration assisting control carried out by the control unit 80B will be described. FIG. 10 is a flowchart showing a procedure for the drive-wheel rotation-speed acceleration assisting control.

First at step S31, the control unit 80B determines whether or not the leaning vehicle 10B is moving. This determination is made based on the rotation speed of the rear wheel 14b sent from the rear-wheel rotation-speed sensor 94B.

When the leaning vehicle 10B is not moving (NO at step S31), the control unit 80B terminates the drive-wheel rotation-speed acceleration assisting control. When the leaning vehicle 10B is moving (YES at step S31), at step S32, the control unit 80B determines whether or not the acceleration grip 64 is operated. This determination is made based on the amount of operation of the acceleration grip 64 sent from the acceleration-grip position sensor 90.

When the acceleration grip 64 is operated (YES at step S32), the control unit 80B terminates the drive-wheel rotation-speed acceleration assisting control. When the acceleration grip 64 is not operated (NO at step S32), at step S33, the control unit 80B determines whether or not the gear position of the transmission 34 is first. This determination is made based on the gear position of the transmission 34 detected by the gear position sensor 96.

When the gear position of the transmission 34 is not first (NO at step S33), the control unit 80B terminates the drive-wheel rotation-speed acceleration assisting control. When the gear position of the transmission 34 is first (YES at step S33), at step S34, the control unit 80B sends a signal for adjustment of the throttle opening to the throttle-valve drive unit 92. The throttle-valve drive unit 92 adjusts the throttle opening in accordance with this signal. Then, the control unit 80B completes the drive-wheel rotation-speed acceleration assisting control.

In the procedure shown in FIG. 10, the determination at step S32 as to "whether or not the acceleration grip 64 is operated" may be replaced with, for example, a determination as to "whether or not the vehicle moving speed is equal to or greater than a predetermined speed". When the vehicle moving speed is equal to or greater than the predetermined speed, the processing at step S34 is not carried out.

When the throttle opening is adjusted in the above-described way, the input signal sent from the throttle opening sensor 95 changes. Accordingly, the amount of fuel spray set by the injector control section 824 changes. Specifically, the amount of fuel spray set by the injector control section 824 after the adjustment of the throttle opening becomes greater than the amount of fuel spray when the throttle valve 40 is fully closed. Thereby, the speed of the engine 32 increases.

When the speed of the engine 32 increases in this way, the power to be transmitted to the rear wheel 14B becomes greater. In this state, unless the rider operates the clutch lever 66, that is, as long as the clutch 36 is kept connected, a greater power can be transmitted from the engine 32 to the rear wheel 14B. As a result, the rotation speed of the rear wheel 14B can be increased so that the leaning vehicle 10B can move at a low speed.

As with the case of the leaning vehicle 10, the leaning vehicle 10B is easy to drive and turn at a low speed.

In the leaning vehicle 10B, in the procedure for the drive-wheel rotation-speed acceleration assisting control, the control unit 80B determines especially whether or not the gear position of the transmission 34 is first. Therefore, only when the gear position of the transmission 34 is first, the speed of the engine 32 can be increased without the rider operating the acceleration grip 64.

### (Modification 3)

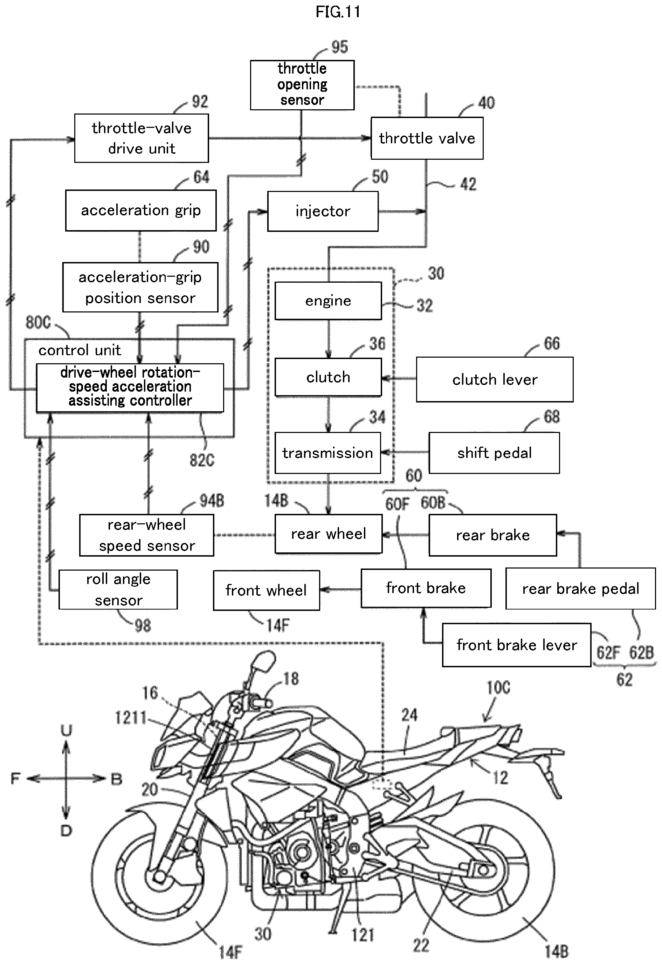

With reference to FIG. 11, a leaning vehicle 10C according to Modification 3 of the embodiment of the present teaching will be described. FIG. 11 is a diagram including a left side view of the leaning vehicle 10C and a block diagram of a control system of the leaning vehicle 10C.

The leaning vehicle 10C is different from the leaning vehicle 10 in that the leaning vehicle 10C further includes a roll angle sensor 98. The roll angle sensor 98 detects the roll angle of the vehicle body 12. The roll angle sensor 96 sends a detection result on the roll angle of the vehicle body 12 to a control unit 80C.

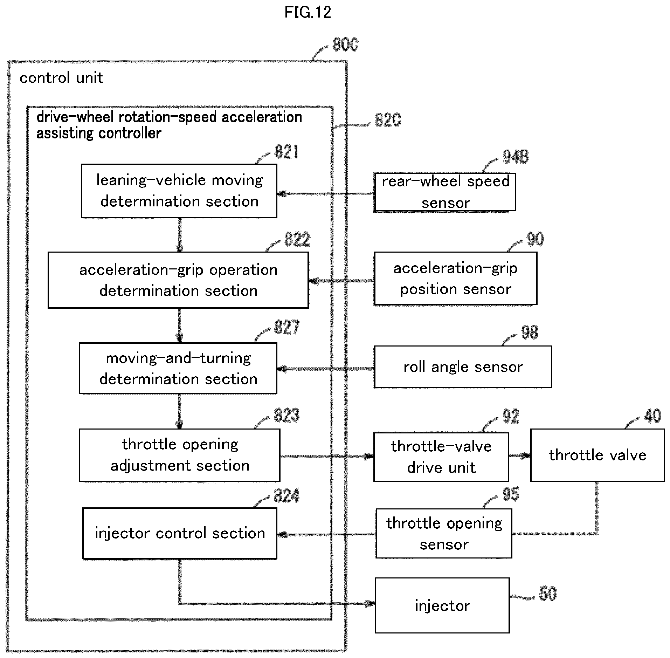

The leaning vehicle 10C is different from the leaning vehicle 10 also in that the control unit 80C is used instead of the control unit 80. With reference to FIG. 12, the control unit 80C will be described. FIG. 12 is a block diagram of the control unit 80C.

The control unit 80C is different from the control unit 80 in that the control unit 80C includes a drive-wheel rotation-speed acceleration assisting controller 82C instead of the drive-wheel rotation-speed acceleration assisting controller 82. The drive-wheel rotation-speed acceleration assisting controller 82C is different from the drive-wheel rotation-speed acceleration assisting controller 82 in that the drive-wheel rotation-speed acceleration assisting controller 82C further includes a moving-and-turning determination section 827. The moving-and-turning determination section 827 determines whether or not the leaning vehicle 10C is turning, based on the roll angle of the vehicle body 12 detected by the roll angle sensor 98. Specifically, when the roll angle of the vehicle body 12 detected by the roll angle sensor 98 is greater than a predetermined angle, the moving-and-turning determination section 827 determines that the leaning vehicle 10C is turning. The moving-and-turning determination section 827 is implemented, for example, when the CPU (central processing unit) reads a program stored in the involatile memory and executes a predetermined process according to the program.

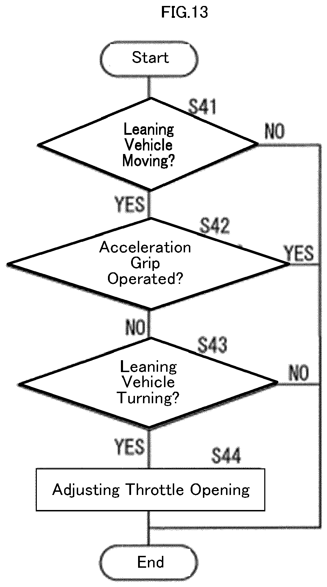

Next, with reference to FIG. 13, drive-wheel rotation-speed acceleration assisting control carried out by the control unit 80C will be described. FIG. 13 is a flowchart showing a procedure for the drive-wheel rotation-speed acceleration assisting control carried out by the control unit 80C.

First, at step S41, the control unit 80C determines whether or not the leaning vehicle 10C is moving. This determination is made based on the rotation speed of the rear wheel 14B sent from the rear-wheel speed sensor 94B.

When the leaning vehicle 10C is not moving (NO at step S41), the control unit 80C terminates the drive-wheel rotation-speed acceleration assisting control. When the leaning vehicle 10C is moving (YES at step S41), at step S42, the control unit 80C determines whether or not the acceleration grip 64 is operated. This determination is made based on the amount of operation of the acceleration grip 64 sent from the acceleration-grip position sensor 90.

When the acceleration grip 64 is operated (YES at step S42), the control unit 80C terminates the drive-wheel rotation-speed acceleration assisting control. When the acceleration grip 64 is not operated (NO at step S42), at step S43, the control unit 80C determines whether or not the leaning vehicle 10C is turning, based on the roll angle of the vehicle body 12 detected by the roll angle sensor 98.

When the leaning vehicle 10C is not turning (NO at step S43), the control unit 80C terminates the drive-wheel rotation-speed acceleration assisting control. When the leaning vehicle 10C is turning (YES at step S43), at step S44, the control unit 80C sends a signal for adjustment of the throttle opening to the throttle-valve drive unit 92. The throttle-valve drive unit 92 adjusts the throttle opening in accordance with this signal. Then, the control unit 80C completes the drive-wheel rotation-speed acceleration assisting control.

In the procedure shown in FIG. 13, the determination at step S42 as to "whether or not the acceleration grip 64 is operated" may be replaced with, for example, a determination as to "whether or not the vehicle moving speed is equal to or greater than a predetermined speed" or a determination as to "whether or not the shift position is first". When the vehicle moving speed is equal to or greater than the predetermined speed or when the shift position is not first, the processing at step S44 is not carried out.

When the throttle opening is adjusted in the above-described way, the input signal sent from the throttle opening sensor 95 changes. Accordingly, the amount of fuel spray set by the injector control section 824 changes. Specifically, the amount of fuel spray set by the injector control section 824 after the adjustment of the throttle opening becomes greater than the amount of fuel spray when the throttle valve 40 is fully closed. Thereby, the speed of the engine 32 increases.

When the speed of the engine 32 increases in this way, the power to be transmitted to the rear wheel 14B becomes greater. In this state, unless the rider operates the clutch lever 66, that is, as long as the clutch 36 is kept connected, a greater power can be transmitted from the engine 32 to the rear wheel 14B. As a result, the rotation speed of the rear wheel 14B can be increased so that the leaning vehicle 10C can move at a low speed.

As with the case of the leaning vehicle 10, the leaning vehicle 10C is easy to drive and turn at a low speed.

In the leaning vehicle 10C, in the procedure for the drive-wheel rotation-speed acceleration assisting control, the control unit 80C determines especially whether or not the leaning vehicle 10C is turning, based on the roll angle of the vehicle body 12 detected by the roll angle sensor 98. Therefore, only when the leaning vehicle 10C is turning, the speed of the engine 32 can be increased without the rider operating the acceleration grip 64.

In Modification 3, the roll angle sensor 98 may be replaced with a roll rate sensor that detects the roll rate of the vehicle body 12. In this case, the roll rate sensor sends a detection result on the roll rate of the vehicle body 12 to the control unit 80C. The moving-and-turning determination section 827 of the control unit 80C determines whether or not the leaning vehicle 10C is turning, based on the roll rate of the vehicle body 12 detected by the roll rate sensor.

### (Modification 4)

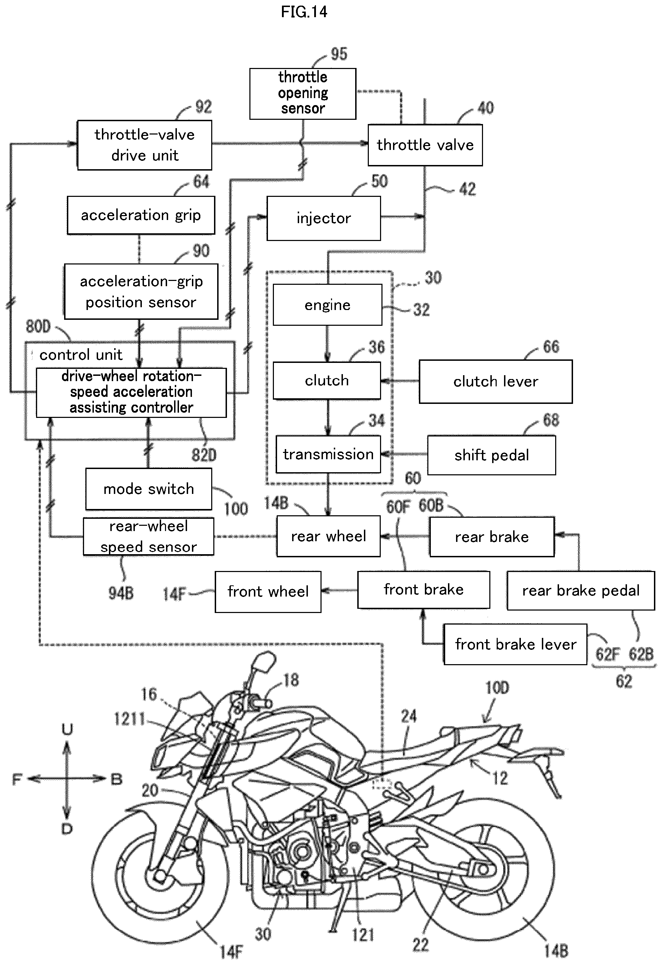

With reference to FIG. 14, a leaning vehicle 10D according to Modification 4 of the embodiment of the present teaching will be described. FIG. 14 is a diagram including a left side view of the leaning vehicle 10D and a block diagram of a control system of the leaning vehicle 10D.

The leaning vehicle 10D is different from the leaning vehicle 10 in that the leaning vehicle 10D further includes a mode switch 100. The mode switch 100 switches the control mode between an assisting mode in which a control unit 80D carries out drive-wheel rotation-speed acceleration assisting control and a normal mode in which the control unit 80D does not carry out the drive-wheel rotation-speed acceleration assisting control. The mode switch 100 is placed in a position to be operable by the rider. The mode switch 100 is, for example, attached to the handlebar 18. The mode switch 100 sends a signal indicating the operation of the mode switch made by the rider to the control unit 80D.

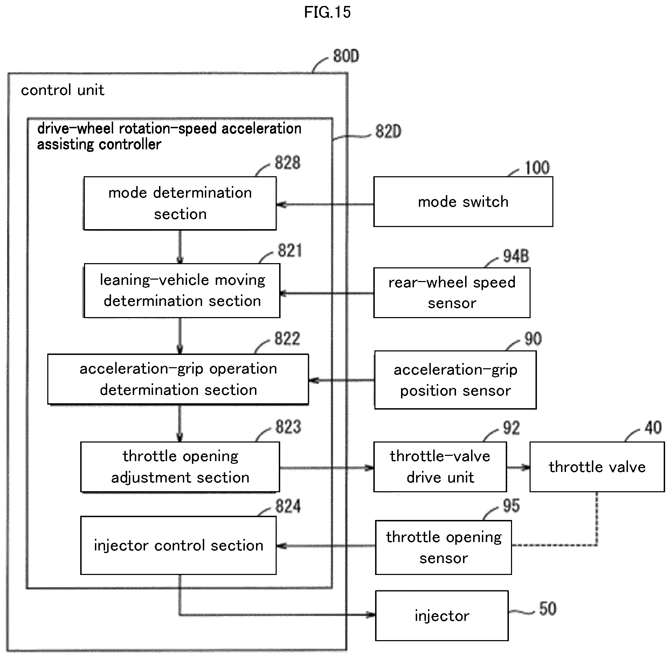

The leaning vehicle 10D is different from the leaning vehicle 10 in that the control unit 80D is used instead of the control unit 80. With reference to FIG. 15, the control unit 80D will be described. FIG. 15 is a block diagram of the control unit 80D.

The control unit 80D is different from the control unit 80 in that the control unit 80D includes a drive-wheel rotation-speed acceleration assisting controller 82D instead of the drive-wheel rotation-speed acceleration assisting controller 82. The drive-wheel rotation-speed acceleration assisting controller 82D is different from the drive-wheel rotation-speed acceleration assisting controller 82 in that the drive-wheel rotation-speed acceleration assisting controller 82D further includes a mode determination section 828. The mode determination section 828 determines whether or not the assisting mode is currently selected, based on the signal sent from the mode switch 100. The mode determination section 828 is implemented, for example, when the CPU (central processing unit) reads a program stored in the volatile memory and executes a predetermined process according to the program.

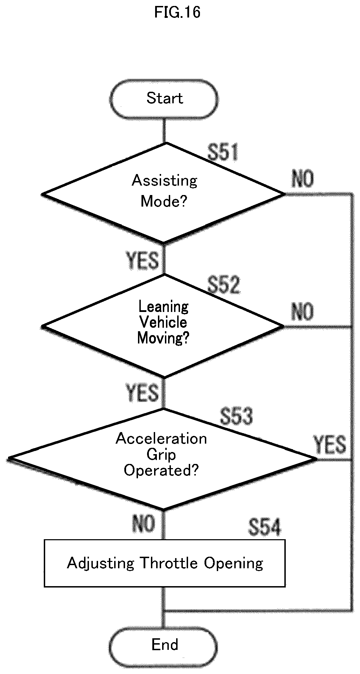

With reference to FIG. 16, the drive-wheel rotation-speed acceleration assisting control carried out by the control unit 80D will be described. FIG. 16 is a flowchart showing a procedure for the drive-wheel rotation-speed acceleration assisting control carried out by the control unit 80D.

First at step S51, the control unit 80D determines whether or not the assisting mode is selected, based on the signal sent from the mode switch 100. When the assisting mode is not selected (NO at step S51), the control unit 80D terminates the drive-wheel rotation-speed acceleration assisting control. When the assisting mode is selected (YES at step S51), at step S52, the control unit 80D determines whether or not the leaning vehicle 10D is moving. This determination is made based on the rotation speed of the rear wheel 14B sent from the rear-wheel speed sensor 94B.

When the leaning vehicle 10D is not moving (NO at step S52), the control unit 80D terminates the drive-wheel rotation-speed acceleration assisting control. When the leaning vehicle 10D is moving (YES at step S52), at step S53, the control unit 80D determines whether or not the acceleration grip 64 is operated. This determination is made based on the amount of operation of the acceleration grip 64.

When the acceleration grip 64 is operated (YES at step S53), the control unit 80D terminates the drive-wheel rotation-speed acceleration assisting control. When the acceleration grip 64 is not operated (NO at step S53), at step S54, the control unit 80D sends a signal for adjustment of the throttle opening to the throttle-valve drive unit 92. The throttle-valve drive unit 92 adjusts the throttle opening in accordance with this signal. Then, the control unit 80D completes the drive-wheel rotation-speed acceleration assisting control.

In the procedure shown in FIG. 16, the determination at step S53 as to "whether or not the acceleration grip 64 is operated" may be replaced with, for example, a determination as to "whether or not the vehicle moving speed is equal to or greater than a predetermined speed" or a determination as to "whether or not the shift position is first". When the vehicle moving speed is equal to or greater than the predetermined speed or when the shift position is not first, the processing at step S54 is not carried out.

When the throttle opening is adjusted in the above-described way, the input signal sent from the throttle opening sensor 95 changes. Accordingly, the amount of fuel spray set by the injector control section 824 changes. Specifically, the amount of fuel spray set by the injector control section 824 after the adjustment of the throttle opening becomes greater than the amount of fuel spray when the throttle valve 40 is fully closed. Thereby, the speed of the engine 32 increases.

When the speed of the engine 32 increases in this way, the power to be transmitted to the rear wheel 14B becomes greater. In this state, unless the rider operates the clutch lever 66, that is, as long as the clutch 36 is kept connected, a greater power can be transmitted from the engine 32 to the rear wheel 14B. As a result, the rotation speed of the rear wheel 14B can be increased so that the leaning vehicle 10D can move at a low speed.

As with the case of the leaning vehicle 10, the leaning vehicle 10D is easy to drive and turn at a low speed.

In the leaning vehicle 10D, in the procedure for the drive-wheel rotation-speed acceleration assisting control, the control unit 80D determines especially whether or not the signal sent from the mode switch 100 indicates selection of the assisting mode. Therefore, only when the assisting mode is selected, the speed of the engine 32 can be increased without the rider operating the acceleration grip 64.

### (Modification 5)

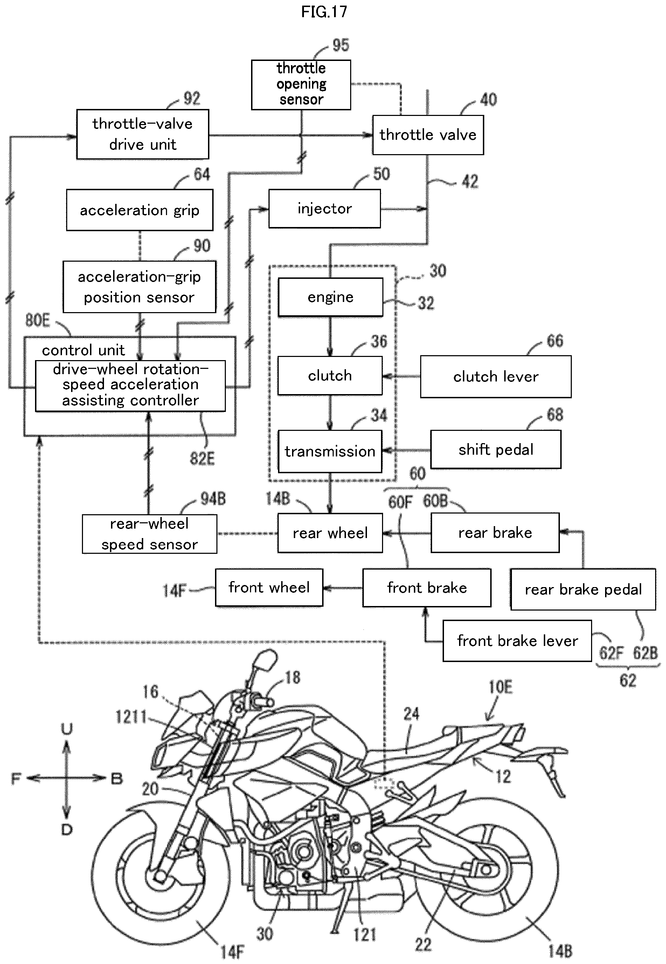

With reference to FIG. 17, a leaning vehicle 10E according to Modification 5 of the embodiment of the present teaching will be described. FIG. 17 is a diagram including a left side view of the leaning vehicle 10E and a block diagram of a control system of the leaning vehicle 10E. The leaning vehicle 10E is different from the leaning vehicle 10 in that the leaning vehicle 10E includes a control unit 80E instead of the control unit 80.

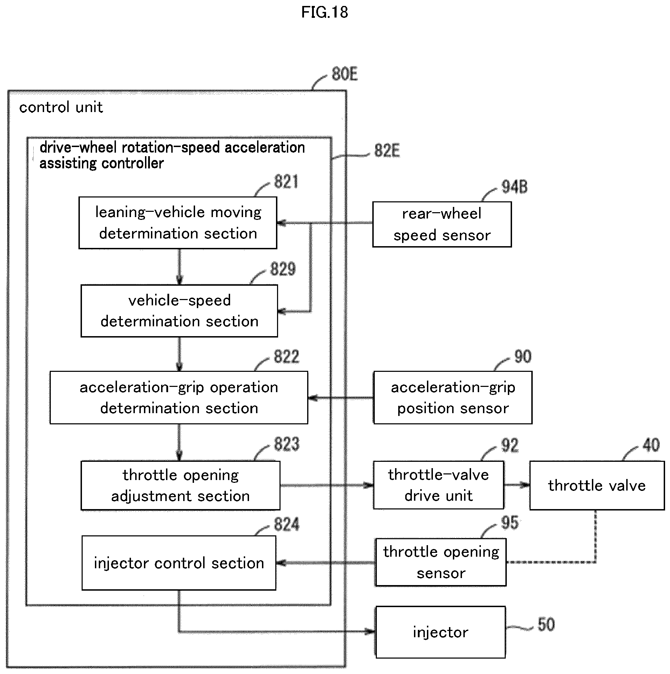

With reference to FIG. 18, the control unit 80E will be described. FIG. 18 is a block diagram of the control unit 80E.

The control unit 80E is different from the control unit 80 in that the control unit 80E includes a drive-wheel rotation-speed acceleration assisting controller 82E instead of the drive-wheel rotation-speed acceleration assisting controller 82. The drive-wheel rotation-speed acceleration assisting controller 82E is different from the drive-wheel rotation-speed acceleration assisting controller 82 in that the drive-wheel rotation-speed acceleration assisting controller 82E further includes a vehicle-speed determination section 829. The vehicle-speed determination section 829 determines whether or not the moving speed of the leaning vehicle 10E is equal to or lower than a predetermined speed, based on the signal sent from the rear-wheel speed sensor 94B. The predetermined speed is, for example, 20 km/h. The vehicle-speed determination section 829 is implemented, for example, when the CPU (central processing unit) reads a program stored in the involatile memory and executes a predetermined process according to the program.

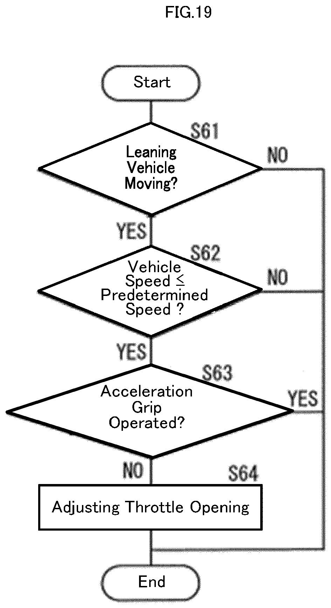

With reference to FIG. 19, drive-wheel rotation-speed acceleration assisting control carried out by the control unit 80E will be described. FIG. 19 is a flowchart showing a procedure for the drive-wheel rotation-speed acceleration assisting control carried out by the control unit 80E.

First at step S61, the control unit 80E determines whether or not the leaning vehicle 10E is moving. This determination is made based on the rotation speed of the rear wheel 14B sent from the rear-wheel speed sensor 94E.

When the leaning vehicle 10E is not moving (NO at step S61), the control unit 80E terminates the drive-wheel rotation-speed acceleration assisting control. When the leaning vehicle 10E is moving (YES at step S61), at step S62, the control unit 80E determines whether or not the moving speed of the leaning vehicle 10E is equal to or lower than the predetermined speed.

When the moving speed of the leaning vehicle 10E is higher than the predetermined speed (NO at step S62), the control unit 80E terminates the drive-wheel rotation-speed acceleration assisting control. When the moving speed of the leaning vehicle 10E is equal to or lower than the predetermined speed (YES at step S62), at step S63, the control unit 80E determines whether or not the acceleration grip 64 is operated. This determination is made based on the amount of operation of the acceleration grip 64.

When the acceleration grip 64 is operated (YES at step S63), the control unit 80E terminates the drive-wheel rotation-speed acceleration assisting control. When the acceleration grip 64 is not operated (NO at step S63), at step S64, the control unit 80E sends a signal for adjustment of the throttle opening to the throttle-valve drive unit 92. The throttle-valve drive unit 92 adjusts the throttle opening in accordance with this signal. Then, the control unit 80E completes the drive-wheel rotation-speed acceleration assisting control.

In the procedure shown in FIG. 19, the determination at step S63 as to "whether or not the acceleration grip 64 is operated" may be replaced with, for example, a determination as to "whether or not the shift position is first". When the shift position is not first, the processing at step S64 is not carried out.

When the throttle opening is adjusted in the above-described way, the input signal sent from the throttle opening sensor 95 changes. Accordingly, the amount of fuel spray set by the injector control section 824 changes. Specifically, the amount of fuel spray set by the injector control section 824 after the adjustment of the throttle opening becomes greater than the amount of fuel spray when the throttle valve 40 is fully closed. Thereby, the speed of the engine 32 increases.

When the speed of the engine 32 increases in this way, the power to be transmitted to the rear wheel 14B becomes greater. In this state, unless the rider operates the clutch lever 66, that is, as long as the clutch 36 is kept connected, a greater power can be transmitted from the engine 32 to the rear wheel 14B. As a result, the rotation speed of the rear wheel 14B can be increased so that the leaning vehicle 10E can move at a low speed.

As with the case of the leaning vehicle 10, the leaning vehicle 10E is easy to drive and turn at a low speed.

In the leaning vehicle 10E, in the procedure for the drive-wheel rotation-speed acceleration assisting control, the control unit 80E determines especially whether or not the moving speed of the leaning vehicle 10E is equal to or lower than a predetermined speed. Therefore, only when the moving speed of the leaning vehicle 10E is equal to or lower than the predetermined speed, the speed of the engine 32 can be increased without the rider operating the acceleration grip 64.

### (Modification 6)

The additional conditions described in Modifications 1 to 5 may be combined arbitrarily. For example, both the additional condition described in Modification 5 (whether or not the moving speed of the leaning vehicle is equal to or lower than a predetermined speed) and the additional condition described in Modification 3 (whether or not the leaning vehicle is turning) may be adopted at the same time.

### (Modification 7)

The leaning vehicle 10 according to the above-described embodiment includes a clutch lever 66 and a shift pedal 68. When the rider operates the clutch lever 66 and the shift pedal 68, the combination of gears in the transmission 34 is changed. However, a leaning vehicle according to the present teaching is not limited to such a leaning vehicle including a clutch lever 66 and a shift pedal 68.

A leaning vehicle according to Modification 7 is different from the leaning vehicle 10 in that the leaning vehicle according to Modification 7 includes neither the clutch lever 66 nor the shift pedal 68. The leaning vehicle according to Modification 7 is different from the leaning vehicle 10 additionally in that the leaning vehicle according to Modification 7 includes a centrifugal-type non-stage transmission instead of the transmission 34, which is what is called a manual transmission. The leaning vehicle according to Modification 7 includes a centrifugal-type clutch instead of the clutch 36. The leaning vehicle according to Modification 7 includes a rear brake lever instead of the rear brake pedal 62B.

While such a leaning vehicle is moving, the speed of the engine 32 can be increased without the rider operating the acceleration grip 64. Accordingly, the centrifugal-type clutch is kept connected. Thus, the rider can drive the leaning vehicle at a low speed without operating the acceleration grip 64. Moreover, the rider can decelerate the moving speed of the leaning vehicle by operating the front brake lever 62F or the rear brake lever. Hence, while driving the leaning vehicle at a low speed without operating the acceleration grip 64, the rider can adjust the moving speed of the leaning vehicle.

As with the case of the leaning vehicle 10, such a leaning vehicle is easy to drive and turn at a low speed.

In Modification 7, the leaning vehicle may be controlled such that the speed of the engine 32 can be increased without the rider operating the acceleration grip 64 only when the leaning vehicle is turning. The determination as to whether or not the leaning vehicle is turning can be made, for example, based on the difference between the rotation speed of the front wheel 14F and the rotation speed of the rear wheel 14B.

In Modification 7, the determination as to whether or not the leaning vehicle is turning may be made based on the roll angle or the roll rate of the vehicle body.

In Modification 7, the leaning vehicle may be controlled such that the speed of the engine 32 can be increased without the rider operating the acceleration grip 64 only when the controller is operating in the assisting mode to carry out the drive-wheel rotation-speed acceleration assisting control. The switch-on and switch-off of the assisting mode is made, for example, by turning on or off a mode switch.

### (Other Embodiments)

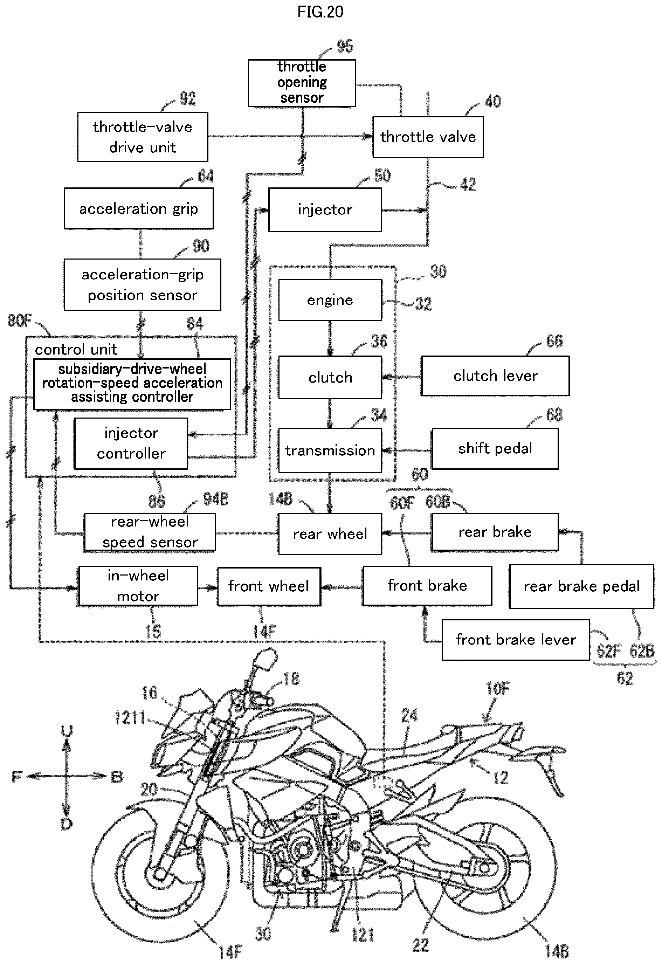

With reference to FIG. 20, a leaning vehicle 10F according to another embodiment of the present teaching will be described. FIG. 20 is a diagram including a left side view of the leaning vehicle 10F and a block diagram of a control system of the leaning vehicle 10F.

The leaning vehicle 10F is different from the leaning vehicle 10 in that the leaning vehicle 10F further includes an in-wheel motor 15, which works as a subsidiary drive source. Specifically, the leaning vehicle 10F includes an in-wheel motor 15 as a device that generates a power to be transmitted to the front wheel 14F serving as a subsidiary drive wheel, in addition to the engine 30 working as a main drive source that generates a power to be transmitted to the rear wheel 14 serving as a main drive wheel. The in-wheel motor 15 is attached to the front wheel 14F.

The leaning vehicle 14F is different from the leaning wheel 10 also in that the leaning vehicle 14 includes a control unit 80F instead of the control unit 80.

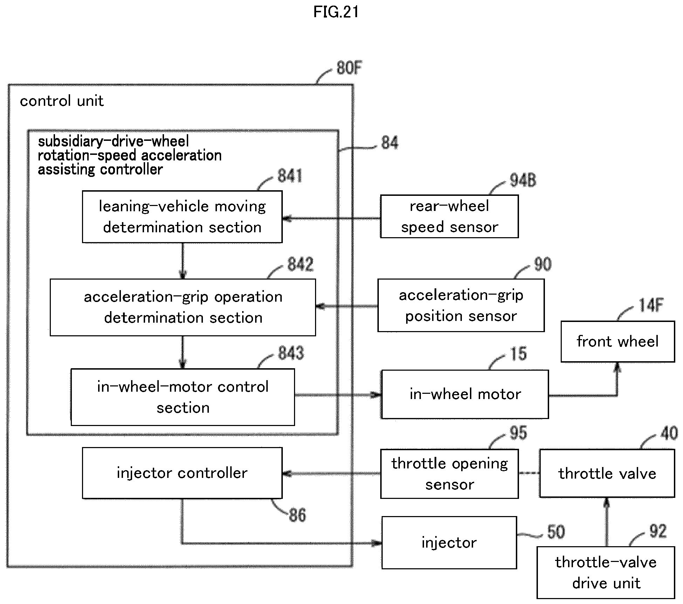

With reference to FIG. 21, the control unit 80F will be described. FIG. 21 is a block diagram of the control unit 80F.

The control unit 80F includes a subsidiary-drive-wheel rotation-speed acceleration assisting controller 84 and an injector controller 86. Each of the subsidiary-drive-wheel rotation-speed acceleration assisting controller 84 and the injector controller 86 is implemented, for example, when a CPU (central processing unit) reads a program stored in an involatile memory and executes a predetermined process according to the program.

The subsidiary-drive-wheel rotation-speed acceleration assisting controller 84 transmits a power from the in-wheel motor 15 to the front wheel 14F without the rider performing the drive-wheel rotation-speed increasing operation. Thereby, the rotation speed of the front wheel 14F is increased, and the moving speed of the leaning vehicle 10F is increased, so that, in turn, there is an increase of centrifugal force acting on the leaning vehicle 10F while the leaning vehicle 10F is turning.

The subsidiary-drive-wheel rotation-speed acceleration assisting controller 84 includes a leaning-vehicle moving determination section 841, an acceleration-grip operation determination section 842, and an in-wheel-motor control section 843. Each of the leaning-vehicle moving determination section 841, the acceleration-grip operation determination section 842, and the in-wheel-motor control section 843 is implemented, for example, when the CPU (central processing unit) reads a program stored in the involatile memory and executes a predetermined process according to the program.

The leaning-vehicle moving determination section 841 determines whether or not the leaning vehicle 10F is moving, based on the rotation speed of the rear wheel 14B sent from the rear-wheel speed sensor 94B.

The acceleration-grip operation section 842 determines whether or not the acceleration grip 64 is operated, based on the amount of operation of the acceleration grip 64 sent from the acceleration-grip position sensor 90.

The in-wheel-motor control section 843 drives the in-wheel motor 15 when the leaning vehicle 10F is moving and when the acceleration grip 64 is not operated. Thereby, the output power of the in-wheel motor 15 is transmitted to the front wheel 14F.

The injector controller 86 sets an amount of fuel spray in accordance with a signal that is sent from the throttle opening sensor 95 and indicates the degree of throttle opening. The injector controller 86 further controls the injector 50 such that the injector 50 sprays the set amount of fuel. The injector controller 86 may set the amount of fuel spray, for example, by reference to not only the signal sent from the throttle opening sensor 95 but also signals sent from other sensors.

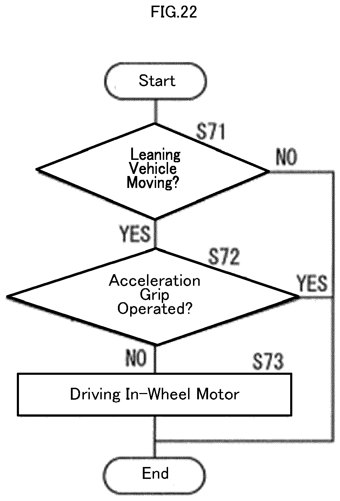

With reference to FIG. 22, subsidiary drive-wheel rotation-speed acceleration assisting control carried out by the control unit 80F will be described. FIG. 22 is a flowchart showing a procedure for the subsidiary drive-wheel rotation-speed acceleration assisting control carried out by the control unit 80F.

First at step S71, the control unit 80F determines whether or not the leaning vehicle 10F is moving. This determination is made based on the rotation speed of the rear wheel 14B sent from the rear-wheel speed sensor 94B.

When the leaning vehicle 10F is not moving (NO at step S17), the control unit 80F terminates the subsidiary drive-wheel rotation-speed acceleration assisting control. When the leaning vehicle 10F is moving (YES at step S71), at step S72, the control unit 80F determines whether or not the acceleration grip 64 is operated. This determination is made based on the amount of operation of the acceleration grip 64 sent from the acceleration-grip position sensor 90.

When the acceleration grip 64 is operated (YES at step S72), the control unit 80F terminates the subsidiary drive-wheel rotation-speed acceleration assisting control. When the acceleration grip 64 is not operated (NO at step S72), at step S73, the control unit 80F drives the in-wheel motor 15. Then, the control unit 80F completes the subsidiary drive-wheel rotation-speed acceleration assisting control.

In the procedure shown in FIG. 22, the determination at step S72 as to "whether or not the acceleration grip 64 is operated" may be replaced with, for example, a determination as to "whether or not the vehicle moving speed is equal to or greater than a predetermined speed" or a determination as to "whether or not the shift position is first". When the vehicle moving speed is equal to or greater than the predetermined speed or when the shift position is not first, the processing at step S73 is not carried out.

When the in-wheel motor 15 is driven in the above-described way, the output power of the in-wheel motor 15 is transmitted to the front wheel 14F. As a result, the rotation speed of the front wheel 14F can be increased without the rider operating the acceleration grip 64 so that the leaning vehicle 10 can continue moving at a low speed.

Thus, while the leaning vehicle 10F is moving, the leaning vehicle 10F can continue moving at a low speed (for example, 10 km/h or lower) without the rider operating the acceleration grip 64. In this state, even if the leaning vehicle 10F is turned, the leaning vehicle 10F is centrifugalized sufficiently during the turn. Therefore, the rider does not need to operate the acceleration grip 64 when turning the leaning vehicle 10F. Accordingly, the rider's burden to drive and turn the leaning vehicle 10F can be reduced. Thus, the leaning vehicle 10F is easy to drive and turn at a low speed.

Additionally, the rider can decelerate the moving speed of the leaning vehicle 10 by operating the front brake lever 62F or the rear brake pedal 62B. Therefore, when turning the leaning vehicle 10F, the rider can adjust the moving speed of the leaning vehicle 10F during the turn.

### Examples

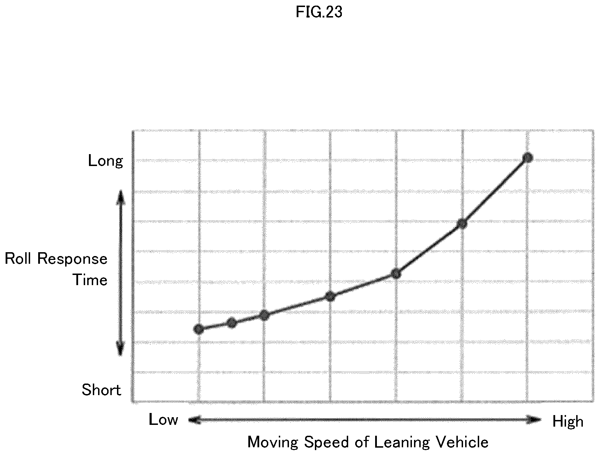

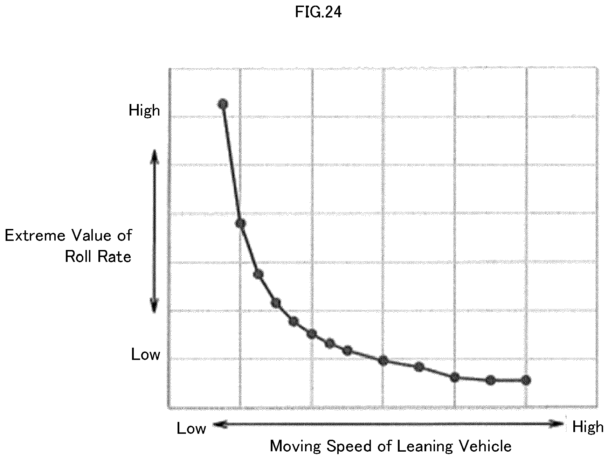

Regarding a leaning vehicle according to the present teaching, the relationship between the vehicle speed and the roll response time and the relationship between the vehicle moving speed and the extreme value of the roll rate were examined. FIG. 23 is a graph showing the relationship between the vehicle moving speed and the roll response time of the leaning vehicle according to the present teaching. FIG. 24 is a graph showing the relationship between the vehicle moving speed and the extreme value of the roll rate of the leaning vehicle according to the present teaching. FIG. 23 shows how long it took from an input of a specified steering torque into the vehicle body in the upright state until the roll angle of the vehicle body became a roll angle corresponding to the inputted steering torque, that is, the time required for completion of a roll angle change from the upright state to the angle corresponding to the inputted steering torque (roll response time) for each vehicle moving speed. FIG. 24 shows the extreme value of the roll rate during a change in response to an input of a specified steering torque into the vehicle body in the upright state for each vehicle moving speed.

As is clear from FIG. 23, as the vehicle moving speed becomes higher, the roll response time becomes longer. Accordingly, even when the rider makes the same operation to turn the leaning vehicle, the vehicle body leans more slowly when the vehicle moving speed is higher. Therefore, it is easier to turn the leaning vehicle when the vehicle moving speed is higher.

As is clear from FIG. 24, as the vehicle moving speed becomes lower, the extreme value of the roll rate becomes greater exponentially. Accordingly, by only increasing the vehicle moving speed even slightly, it is possible to decrease the extreme value of the roll rate. In other words, even when the rider makes the same operation to turn the leaning vehicle, the vehicle body leans more slowly when the vehicle moving speed is increased even slightly. This makes it easier to turn the leaning vehicle.

### (Other Embodiments)

The embodiments and modifications described herein and/or illustrated by the drawings are to make the present teaching easier to understand and not to limit the concept of the present teaching. It is possible to adapt or alter the embodiments and modifications described above without departing from the gist thereof.

The gist includes all equivalent elements, modifications, omissions, combinations (for example, combinations of features of the embodiments and modifications), adaptations and alterations as would be appreciated by those skilled in the art based on the embodiments and modifications disclosed herein. The limitations in the claims are to be interpreted broadly based on the language employed in the claims and not limited to the embodiments described in the present specification or during the prosecution of the present application. Such embodiments and modifications are to be understood as non-exclusive. For example, the terms "preferable" and "good" in the present specification are to be understood as non-exclusive, and these terms mean "preferable but not limited to this" and "good but not limited to this", respectively.

In the embodiments above, leaning vehicles with an engine as a drive source have been described. However, it is certainly possible to apply the present teaching to leaning vehicles with an electric motor as a drive source and leaning vehicles with an engine and an electric motor as a drive source.

The leaning vehicle 10 according to the above-described embodiment may additionally include a front-wheel speed sensor that detects the rotation speed of the front wheel 14F. In this case, the drive-wheel rotation-speed acceleration assisting controller 82 may use the rotation speed of the front wheel 14F detected by the front-wheel speed sensor to determine whether or not the leaning vehicle 10 is moving.

In the embodiments above, the throttle opening is not necessarily changed to increase the speed of the engine 32.

In the embodiments above, the throttle valve 40 may be a mechanical type that is moved by a throttle wire.

### Reference Sign List

10: leaning vehicle
12: vehicle body (leaning vehicle body)
14F: front wheel (steerable wheel)
14B: rear wheel (drive wheel)
16: steering shaft
18: handlebar
20: front fork
22: rear arm
24: seat
30: power unit
32: engine
34: transmission
36: clutch
40: throttle valve
50: injector
60: brake unit
60F: front brake
60B: rear brake
62F: front brake lever
62B: rear brake pedal
62: brake operator
62F: front brake lever
62B: rear brake pedal
64: acceleration grip
66: clutch lever
68: shift pedal
70L: left footrest
70R: right footrest
80: control unit
82: drive-wheel rotation-speed acceleration assisting controller
821: leaning-vehicle moving determination section
822: acceleration-grip operation determination section
823: throttle opening adjustment section
824: injector control section
825: moving-and-turning determination section
826: gear position determination section
827: moving-and-turning determination section
828: mode determination section
829: vehicle-speed determination section
90: acceleration-grip position sensor
92: throttle-valve drive unit
94F: front-wheel speed sensor
94B: rear-wheel speed sensor
95: throttle opening sensor
96: gear position sensor
98: roll angle sensor
100: mode switch

## Claims

1. A leaning vehicle comprising:
a drive source;
a drive wheel that is rotated by a power transmitted from the drive source;
a leaning vehicle body that supports the drive source and the drive wheel, the leaning vehicle body leaning leftward together with the drive wheel by a force applied from a rider of the leaning vehicle due to a left action of the rider when turning left and leaning rightward together with the drive wheel by a force applied from a rider of the leaning vehicle due to a right action of the rider when turning right; and
an acceleration operator that is operable by the rider to increase the power transmitted from the drive source to the drive wheel and thereby increase the rotation speed of the drive wheel, the drive wheel being rotated by the power transmitted from the drive source,
the leaning vehicle being **characterized in that**
the leaning vehicle further comprises:
a control unit that is capable of increasing the rotation speed of the drive wheel by increasing the power transmitted from the drive source to the drive wheel in accordance with the rider's operation of the acceleration operator,
the control unit including a drive-wheel rotation-speed acceleration assisting controller that increases the power transmitted from the drive source to the drive wheel without the rider performing a drive-wheel rotation-speed increasing operation and thereby increases the rotation speed of the drive wheel, whereby the moving speed of the leaning vehicle is accelerated, so that, in turn, there is an increase of centrifugal force acting on the leaning vehicle while the leaning vehicle is moving and turning, the drive-wheel rotation-speed increasing operation being an operation that the rider performs toward the acceleration operator to increase the power transmitted from the drive source to the drive wheel and thereby increase the rotation speed of the drive wheel; and
a brake unit that is operable by the rider to decelerate the moving speed of the leaning vehicle even when the rotation speed of the drive wheel is increased caused by the increase of the power transmitted from the drive source, the increase of the power being performed by the drive-wheel rotation-speed acceleration assisting controller.

2. The leaning vehicle according to claim 1, wherein:
the drive-wheel rotation-speed acceleration assisting controller includes a moving-and-turning determination section that determines whether or not the leaning vehicle is moving and turning; and
when the moving-and-turning determination section determines that the leaning vehicle is moving and turning, the drive-wheel rotation-speed acceleration assisting controller increases the power transmitted from the drive source to the drive wheel without the rider performing the drive-wheel rotation-speed increasing operation to increase the rotation speed of the drive wheel, whereby the moving speed of the leaning vehicle is accelerated, so that, in turn, there is an increase of centrifugal force acting on the leaning vehicle while the leaning vehicle is moving and turning.

3. The leaning vehicle according to claim 2, further comprising:
a steerable wheel that is positioned more frontward or more rearward than the drive wheel with respect to a frontward-rearward direction of the leaning vehicle and is steered by a force applied from the rider of the leaning vehicle due to a steering action of the rider;
a steerable-wheel rotation-speed sensor that detects the rotation speed of the steerable wheel; and
a drive-wheel rotation-speed sensor that detects the rotation speed of the drive wheel,
wherein the moving-and-turning determination section determines whether or not the leaning vehicle is moving and turning, based on a difference between the rotation speed of the drive wheel detected by the drive-wheel rotation-speed sensor and the rotation speed of the steerable wheel detected by the steerable-wheel rotation-speed sensor.

4. The leaning vehicle according to claim 2 or 3, further comprising a roll angle sensor that detects the roll angle of the leaning vehicle or a roll rate sensor that detects the roll rate of the leaning vehicle,
wherein the moving-and-turning determination section determines whether or not the leaning vehicle is moving and turning, based on the roll angle of the leaning vehicle detected by the roll angle sensor or the roll rate of the leaning vehicle detected by the roll rate sensor.

5. The leaning vehicle according to any one of claims 1 to 4, further comprising:
a transmission that is positioned in a power transmission route from the drive source to the drive wheel and is operable by the rider; and
a gear position sensor that detects the gear position of the transmission,
wherein, when the gear position of the transmission detected by the gear position sensor is first, the drive-wheel rotation-speed acceleration assisting controller increases the power transmitted from the drive source to the drive wheel without the rider performing the drive-wheel rotation-speed increasing operation and thereby increases the rotation speed of the drive wheel, whereby the moving speed of the leaning vehicle is accelerated, so that, in turn, there is an increase of centrifugal force acting on the leaning vehicle while the leaning vehicle is moving and turning leftward or rightward.

6. The leaning vehicle according to any one of claims 1 to 5, further comprising a vehicle-speed sensor that detects the moving speed of the leaning vehicle,
wherein:
the drive-wheel rotation-speed acceleration assisting controller includes a vehicle-speed determination section that determines if the moving speed of the leaning vehicle detected by the vehicle-speed sensor is not surpassing a predetermined speed;
when the vehicle-speed determination section determines that the moving speed of the leaning vehicle detected by the vehicle-speed sensor is not surpassing a predetermined speed, the drive-wheel rotation-speed acceleration assisting controller increases the power transmitted from the drive source to the drive wheel without the rider performing the drive-wheel rotation-speed increasing operation and thereby increases the rotation speed of the drive wheel, whereby the moving speed of the leaning vehicle is accelerated, so that, in turn, there is an increase of centrifugal force acting on the leaning vehicle while the leaning vehicle is moving and turning.

7. The leaning vehicle according to any one of claims 1 to 6, wherein the drive source is an engine including a combustion chamber in which a gas mixture is used for combustion.

8. The leaning vehicle according to any one of claims 1 to 7, further comprising:
a clutch that is positioned in a power transmission route from the drive source to the drive wheel and is switchable between a power transmission allowing state and a power transmission interrupting state, the power transmission allowing state being such that the output power of the drive source is transmitted to the drive wheel, the power transmission interrupting state being such that the output power of the drive source is not transmitted to the drive wheel; and
a clutch operator that is operable by the rider to switch the clutch between the power transmission allowing state and the power transmission interrupting state, the clutch being kept in the power transmission allowing state without clutch operation by the rider,
wherein when the clutch is kept in the power transmission allowing state without clutch operation by the rider, the drive-wheel rotation-speed acceleration assisting controller increases the power transmitted from the drive source to the drive wheel without the rider performing the drive-wheel rotation-speed increasing operation and thereby increases the rotation speed of the drive wheel, whereby the moving speed of the leaning vehicle is accelerated, so that, in turn, there is an increase of centrifugal force acting on the leaning vehicle while the leaning vehicle is moving and turning.

9. A leaning vehicle comprising:
a main drive source;
a main drive wheel that is rotated by a power transmitted from the main drive source;
a leaning vehicle body that supports the main drive source and the main drive wheel, the leaning vehicle body leaning leftward together with the main drive wheel by a force applied from a rider of the leaning vehicle due to a left turn action of the rider when turning left and leaning rightward together with the main drive wheel by a force applied from a rider of the vehicle due to a right turn action of the rider when turning right; and
an acceleration operator that is operable by the rider to increase the power transmitted from the main drive source to the main drive wheel, thereby increasing the rotation speed of the main drive wheel, which is rotated by the power transmitted from the main drive source,
the leaning vehicle being **characterized in that**
the leaning vehicle further comprises:
a subsidiary drive source;
a subsidiary drive wheel that is rotated by a power transmitted from the subsidiary drive source;
a control unit including a subsidiary-drive-wheel rotation-speed acceleration assisting controller that increases the power transmitted from the subsidiary drive source to the subsidiary drive wheel without the rider performing a main drive-wheel rotation-speed increasing operation and thereby increases the rotation speed of the subsidiary drive wheel, whereby the moving speed of the leaning vehicle is accelerated, so that, in turn, there is an increase of centrifugal force acting on the leaning vehicle while the leaning vehicle is moving and turning, the main-drive-wheel rotation-speed increasing operation being an operation that the rider performs toward the acceleration operator to increase the power transmitted from the main drive source to the main drive wheel and thereby increase the rotation speed of the main drive wheel; and
a brake unit that is operable by the rider to decelerate the moving speed of the leaning vehicle even when the rotation speed of the subsidiary drive wheel is increased caused by the increase of the power transmitted from the subsidiary drive source to the subsidiary drive wheel, the increase of the power being performed by the subsidiary-drive-wheel rotation-speed acceleration assisting controller.

10. The leaning vehicle according to claim 9,
wherein the subsidiary drive source is an in-wheel motor attached to the subsidiary drive wheel.
